(19) Europäisches Patentamt / European Patent Office / Office européen des brevets

(11) **EP 4 366 466 A1**

(12) **EUROPEAN PATENT APPLICATION**
published in accordance with Art. 153(4) EPC

(43) Date of publication:
**08.05.2024 Bulletin 2024/19**

(21) Application number: 22833219.3

(22) Date of filing: **29.06.2022**

(51) International Patent Classification (IPC):
*H05B 3/20* (2006.01)    *B60J 1/00* (2006.01)
*B60S 1/02* (2006.01)    *C03C 27/12* (2006.01)
*H05B 3/84* (2006.01)    *H05B 3/86* (2006.01)

(52) Cooperative Patent Classification (CPC):
**B32B 17/00; B60J 1/00; B60S 1/02; H05B 3/20; H05B 3/84; H05B 3/86**

(86) International application number:
**PCT/JP2022/025994**

(87) International publication number:
**WO 2023/277073 (05.01.2023 Gazette 2023/01)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **30.06.2021 JP 2021109363**
**05.08.2021 JP 2021129309**

(71) Applicant: **Nippon Sheet Glass Company, Limited Tokyo 108-6321 (JP)**

(72) Inventors:
• **CHIBA, Kazuki**
  **Tokyo 108-6321 (JP)**
• **OGAWA, Hisashi**
  **Tokyo 108-6321 (JP)**

(74) Representative: **HGF**
**HGF Europe LLP**
**Neumarkter Straße 18**
**81673 München (DE)**

(54) **VEHICLE GLASS MODULE**

(57)    A vehicular glass module includes: a glass panel (10) having an information acquisition region (15) which faces an information acquisition device and through which light passes; and a heating unit (30) configured to heat at least the information acquisition region (15) in the glass panel (10). The glass panel (10) includes a first glass plate, a second glass plate, and an interlayer disposed between the first glass plate and the second glass plate and made of thermoplastic resin. The heating unit (30) includes a power supply section (31) disposed on the glass panel (10), and a heater (33) disposed along a plate surface of the glass panel (10) in the information acquisition region (15) and configured to generate heat upon receipt of power supply from the power supply section (31). The heater (33) is configured to be able to heat at least the whole information acquisition region (15) and includes a uniform heating mechanism (H) that uniformly heats the information acquisition region (15).

Fig.3

**Description**

Technical Field

The present invention relates to a vehicular glass module.

Background Art

A windshield (a vehicular glass module as a front window) for an automobile may fog up or freeze up due to a temperature difference between the inside and the outside of the automobile when the outdoor temperature decreases. This blocks the view from the windshield, which may affect driving of the automobile. In view of this, various methods are proposed to solve the problems of fogging or freezing of the windshield. For example, Patent Literature 1 proposes such a technology that bus bars and a heating line are disposed inside a glass panel of a windshield to prevent fogging or freezing by heat generation from the bus bars or the heating line. Further, in terms of a windshield for a vehicle to which an information acquisition device is attached, it has been also known to provide a heater in an information acquisition region where the information acquisition device acquires information, so as to prevent fogging or freezing in the information acquisition region.

Citation List

Patent Literature

Patent Literature 1: Japanese Unexamined Patent Application Publication No. 2017-216193

Summary of Invention

Technical Problem

In a case where the information acquisition region is heated by a heater including a heating line in the windshield, heat is transmitted from the heating line to its surroundings in the information acquisition region. Accordingly, in the information acquisition region, a region where the heating line is disposed has a high temperature, but a region where no heating line is disposed has a temperature decreasing as the region is away from the heating line. Accordingly, in the information acquisition region, temperature unevenness easily occurs between the region where the heating line is disposed and a region apart from the heating line. As described in Patent Literature 1, the windshield is constituted by laminated glass generally including two glass plates and an interlayer disposed therebetween. Here, when temperature unevenness occurs in the information acquisition region, the interlayer disposed in the information acquisition region also has similar temperature unevenness, so that the refractive index in the interlayer changes locally. Further, when a temperature difference increases in the interlayer, a difference in refractive index also increases. Accordingly, the difference in refractive index in the interlayer may add optical strain to a vehicle outside image acquired from the information acquisition region. When optical strain caused by the interlayer is added to the vehicle outside image, the information acquisition device cannot acquire an accurate vehicle outside image from the information acquisition region.
In view of this, it is desired to achieve a vehicular glass module that can reduce temperature unevenness in an information acquisition region at the time when the information acquisition region is heated by a heater.

Solution to Problem

A vehicular glass module according to the present invention has a feature configuration as follows. That is, the vehicular glass module is a vehicular glass module for supporting, on a vehicle inner side, an information acquisition device capable of receiving light from outside a vehicle, and the vehicular glass module includes: a glass panel having an information acquisition region which faces the information acquisition device and through which the light passes; and a heating unit configured to heat at least the information acquisition region in the glass panel. The glass panel includes a first glass plate on a vehicle outer side, a second glass plate on the vehicle inner side, the second glass plate facing the first glass plate, and an interlayer disposed between the first glass plate and the second glass plate and made of thermoplastic resin. The heating unit includes a power supply section disposed on the glass panel, and a heater disposed along a plate surface of the glass panel in the information acquisition region and configured to generate heat upon receipt of power supply from the power supply section. The heater is configured to be able to heat at least the whole information acquisition region and includes a uniform heating mechanism that uniformly heats the information acquisition region.
In the vehicular glass module, when temperature unevenness occurs in the information acquisition region of the glass panel at the time when the information acquisition region is heated by the heater, the interlayer disposed in the information acquisition region also has similar temperature unevenness. Since the temperature unevenness in the interlayer locally changes the refractive index of the interlayer, optical strain might be added to a vehicle outside image acquired by the information acquisition device through the interlayer. In view of this, in the above configuration, the heater configured to generate heat upon receipt of power supply from the power supply section includes the uniform heating mechanism that uniformly heats the information acquisition region. Hereby, the heater can uniformly heat the information acquisition region by the uniform heating mechanism, so that temperature unevenness in the interlayer can be restrained. As a result, the information acquisition region of the glass panel can retrain the occurrence of optical strain caused by the interlayer. Thus, with this configuration, it is possible to achieve a vehicular glass module that can reduce temperature unevenness in an information acquisition region at the time when the information acquisition region is heated by a heater. Here, the meaning that the uniform heating mechanism uniformly heats the information acquisition region is that the maximum temperature gradient of the information acquisition region is a predetermined value or less while the uniform heating mechanism is heating the information acquisition region, for example. The maximum temperature gradient is preferably 3.0 [°C/mm] or less, and more preferably 2.0 [°C/mm] or less.

Another feature configuration is that the uniform heating mechanism uniforms a resistance value of the heater in the information acquisition region and a current density of a current flowing through the heater in the information acquisition region.

When the resistance value of the heater in the information acquisition region and the current density of a current flowing through the heater are uniformed, the potential gradient of the information acquisition region is uniformed. Hereby, the heater can uniformly generate heat in the information acquisition region. As a result, the heater can uniformly heat the information acquisition region by the uniform heating mechanism. The meaning that the resistance value of the heater is uniform in the uniform heating mechanism is that the fluctuation range of sheet resistance in the heater is within ±15% of a predetermined value, for example. It is more preferable that the fluctuation range of sheet resistance in the heater be within ±10% of a predetermined value.

Another feather configuration is that: the uniform heating mechanism includes a transparent conductive coating and paired bus bars configured to supply electric power to the transparent conductive coating; the transparent conductive coating has a first region disposed to cover the whole information acquisition region, and a second region continuous with the first region and disposed outside the information acquisition region; the paired bus bars are disposed to face each other with the first region and the second region being sandwiched between the paired bus bars; and the paired bus bars are disposed such that the whole first region and at least part of the second region are contained in a virtual region obtained such that respective ends, on each side, of respective contact parts of the paired bus bars in contact with the transparent conductive coating are connected to each other.

In the vehicular glass module, the information acquisition region which faces the information acquisition device and through which light passes is formed in a trapezoidal shape having an upper side length equal to or less than one-tenth of a lower side length, for example. In order to prevent fogging or freezing in the information acquisition region, it is desirable that the heater be disposed in a region which covers at least the information acquisition region and which is as narrow as possible. This is because power consumption at the time when the heater heats the information acquisition region can be restrained. However, an edge part of the heater radiates heat to a circumference region where the heater is not disposed, at the time when the heater heats the information acquisition region. Accordingly, the edge part of the heater has a temperature gradient larger than those in other parts. In view of this, it is desirable that the shape of the heater be a shape similar to the information acquisition region and be larger than the information acquisition region. However, even if the heater has such a shape, the interlayer disposed in the information acquisition region may have temperature unevenness, which may locally change the refractive index in the interlayer. In view of this, in the above configuration, the transparent conductive coating constituting the heater has the first region covering the whole information acquisition region, and the second region outside the information acquisition region, within the virtual region formed between the paired bus bars such that respective ends, on each side, of respective contact parts of the paired bus bars in contact with the transparent conductive coating are connected to each other. Hereby, the interval between the paired bus bars becomes generally equal, so that the heater can achieve a uniform potential gradient in the first region covering the information acquisition region. This consequently allows the heater to uniformly generate heat in the information acquisition region, so that the heater can uniformly heat the information acquisition region. As such, with this configuration, when the virtual region by the heater is expanded to outside the information acquisition region in the vehicular glass module, it is possible to uniformly heat the information acquisition region. Further, in the above configuration, when the shape of the virtual region is made as close as possible to the shape of the information acquisition region having a trapezoidal shape, it is possible to restrain power consumption by the heater and to restrain the occurrence of optical strain caused by the interlayer in the information acquisition region.

Another feature configuration is such that: the following expression is satisfied:

[Math. 1]

$$(A/B) \times (C/D) \geq 0.2,$$

where A indicates a length of a first side and B indicates a length of a second side, the first side being a short side and the second side being a long side in terms of two sides with a smaller ratio of the short side to the long side out of two pairs of sides facing each other among four sides forming the virtual region, and C indicates a length of a first perpendicular line and D indicates a length of a second perpendicular line, the first perpendicular line being a line segment with a shorter length and the second perpendicular line being a line segment with a longer length out of two line segments which are perpendicular lines to the second side and which connect opposite ends of the first side to the second side with shortest distances, respectively.

With this configuration, the virtual region is formed into a trapezoidal shape or a rectangular shape having an upper base with a predetermined length. In a case where the virtual region has a trapezoidal shape, when the expression in Math. 1 is satisfied, the upper base with the predetermined length is secured in the virtual region. Hereby, the heater can achieve a uniform potential gradient in the first region covering the information acquisition region. This consequently allows the heater to uniformly generate heat in the information acquisition region, so that the heater can uniformly heat the information acquisition region.

Another feature configuration is such that the paired bus bars are disposed on two sides away from each other with a shorter distance out of two pairs of sides facing each other among four sides forming the virtual region.

In a case where heating is performed by applying a constant voltage to the virtual region formed on the transparent conductive coating of the heater, the transparent conductive coating can have a higher sheet resistance as the distance between the paired bus bars is shorter. Accordingly, when the paired bus bars are disposed on two sides facing each other with a shorter distance in the virtual region like the present configuration, the transparent conductive coating easily secures a predetermined sheet resistance, thereby making it possible to reduce the film thickness of the transparent conductive coating. As a result, the transmission factor of the virtual region containing the information acquisition region can be raised.

Another feature configuration is such that the transparent conductive coating is formed in a rectangular shape along a plate surface of the glass panel.

When the transparent conductive coating has a rectangular shape along the plate surface of the glass panel like the present embodiment, it is possible to achieve a uniform potential gradient in a central part of the transparent conductive coating having a rectangular shape. Accordingly, when the central part of the transparent conductive coating is disposed to correspond to the information acquisition region, the transparent conductive coating can uniformly generate heat to the information acquisition region. As a result, the heater can uniformly heat the information acquisition region by the uniform heating mechanism.

Another feature configuration is such that: the uniform heating mechanism includes a transparent conductive coating and paired bus bars configured to supply electric power to the transparent conductive coating; the transparent conductive coating has a rectangular region covering at least the information acquisition region, and paired widened regions extended continuous with opposite side parts of the rectangular region, respectively, outside the information acquisition region such that the paired widened regions expand in width in a direction along the side parts as the paired widened regions are away from the side parts; the paired bus bars include respective first parts disposed in parallel to each other with the paired bus bars facing each other across the rectangular region, and respective second parts extended from opposite ends of the respective first parts; and the second parts curve to have the same shortest distance from respectively corresponding side parts of the rectangular region.

In this configuration, the width of a part (the widened region) of the transparent conductive coating outside the information acquisition region is larger than the width of a rectangular part (the rectangular region) of the transparent conductive coating that covers the information acquisition region. Hereby, a heating region heated by the heater is expanded to the surroundings of the information acquisition region, so that heat radiation from the information acquisition region is restrained. As a result, the interlayer disposed in the information acquisition region can restrain temperature unevenness due to heat radiation from the peripheral edge of the interlayer. Further, the second parts of the paired bus bars curve to have the same shortest distance from their respectively corresponding side parts of the rectangular region, so that the vicinities of the side parts of the rectangular region can be equally heated by the second parts.

Another feature configuration is such that: the vehicular glass module further includes a transparent substrate having a linear thermal expansion coefficient smaller than a linear thermal expansion coefficient of the interlayer and laminated on one surface of the transparent conductive coating; the heater is disposed between the first glass plate and the second glass plate; and one of the transparent conductive coating and the transparent substrate is disposed on the first glass plate side or the second glass plate side, and the other one is disposed on the interlayer side.

In this configuration, since the transparent substrate laminated on one surface of the transparent conductive coating has a linear thermal expansion coefficient smaller than that of the interlayer, the transparent substrate is hard to cause a difference in refractive index due to unequal heating, as compared with the interlayer. When the transparent substrate that is hard to cause a difference in refractive index is disposed between the transparent conductive coating and any of the glass plates and the interlayer, the transparent substrate is preferentially heated while the transparent substrate maintains its original shape, so that the interlayer is hard to be heated by the transparent conductive coating. Hereby, it is possible to restrain temperature unevenness in the interlayer and to prevent optical strain.

Another feature configuration is such that the transparent conductive coating is attached to the first glass plate or the second glass plate.

With this configuration, no interlayer is present between a glass plate as a heating target and the transparent conductive coating, so that the first glass plate or the second glass can be heated efficiently by the transparent conductive coating. Further, the glass plates have a small thermal expansion coefficient and a high thermal conductivity as compared with the interlayer made of resin or the like. Accordingly, heat generated by the transparent conductive coating can be effectively transmitted over the whole information acquisition region via the glass plates, so that temperature unevenness can be reduced in the information acquisition region.

Another feature configuration is such that the heater is disposed between the first glass plate and the second glass plate and makes contact with the interlayer.

The interlayer disposed between the first glass plate and the second glass plate in the vehicular glass module is made of thermoplastic resin, so that the refractive index of the interlayer easily changes along with temperature changes. However, since the heater includes the uniform heating mechanism, the interlayer in contact with the heater is uniformly heated by the heater, so that the interlayer can restrain temperature unevenness.

Another feature configuration is such that: the heater includes a heating line; the uniform heating mechanism further includes a heat spreading layer disposed between the heating line and the interlayer and having a thermal conductivity higher than a thermal conductivity of the interlayer; and the heat spreading layer is disposed to cover at least the whole information acquisition region.

In a case where the heater is constituted by the heating line, a temperature difference occurs between a region where the heating line is disposed and a region where no heating line is disposed. Here, when the heat spreading layer disposed between the heating line and the interlayer and having a thermal conductivity higher than that of the interlayer is provided like the present configuration, the temperature distribution in the information acquisition region can be made uniform. This also achieves a uniform temperature distribution in the interlayer, thereby making it possible to restrain optical strain caused by the interlayer.

Another feature configuration is such that the heat spreading layer has a volume expansion coefficient smaller than a volume expansion coefficient of the interlayer.

When the heat spreading layer has a volume expansion coefficient smaller than that of the interlayer like this configuration, the heat spreading layer can be stably disposed between the first glass plate and the second glass plate.

Another feature configuration is such that the heating line is attached to the first glass plate or the second glass plate.

In this configuration, no interlayer is present between a glass plate as a heating target and the heating line, so that the first glass plate or the second glass plate can be heated efficiently by the heating line. Further, the glass plates have a small thermal expansion coefficient and a high thermal conductivity as compared with the interlayer made of thermoplastic resin. Accordingly, heat generated by the heating line can be effectively transmitted over the whole information acquisition region via the glass plates, so that temperature unevenness can be reduced in the information acquisition region.

Another feature configuration is such that: the vehicular glass module further includes a shielding layer disposed in a peripheral edge region of the glass panel and having an opening at a position corresponding to the information acquisition region; and the power supply section is covered with the shielding layer.

With this configuration, the power supply section can be disposed with an excellent appearance with the power supply section being covered with the shielding layer disposed in the peripheral edge region of the glass panel and having an opening at a position corresponding to the information acquisition region.

Brief Description of Drawings

FIG. 1 is a plan view of a vehicular glass module according to a first embodiment;
FIG. 2 is a partial sectional view of the vehicular glass module according to the first embodiment;
FIG. 3 is a schematic view of an essential part of the vehicular glass module according to the first embodiment;
FIG. 4 is a schematic view of an essential part of a vehicular glass module according to a comparative example;
FIG. 5 is a temperature distribution map in a heater (a transparent conductive coating) in the comparative example (a trapezoidal shape);

FIG. 6 is a temperature distribution map in a heater (a transparent conductive coating) in the first embodiment;

FIG. 7 is a schematic view of an essential part of a modification of the first embodiment;

FIG. 8 is a schematic view of an essential part of a vehicular glass module according to a second embodiment;

FIG. 9 is a schematic view of an essential part of Modification 1 of the second embodiment;

FIG. 10 is a schematic view of an essential part of Modification 2 of the second embodiment;

FIG. 11 is a schematic view of an essential part of a vehicular glass module according to a third embodiment;

FIG. 12 is a schematic view of an essential part of a vehicular glass module according to a fourth embodiment;

FIG. 13 is a table illustrating examples and test results;

FIG. 14A is a view illustrating a captured image (no current applied) of Sample 1;

FIG. 14B is a view illustrating a captured image (current applied) of Sample 1;

FIG. 14C is a view illustrating a captured image (current applied) of Sample 5;

FIG. 15 is a schematic view of an essential part of a vehicular glass module according to a fifth embodiment;

FIG. 16 is a partial sectional view of a vehicular glass module according to a sixth embodiment;

FIG. 17 is a schematic view of an essential part of a vehicular glass module according to a seventh embodiment;

FIG. 18 is a partial sectional view of the vehicular glass module according to the seventh embodiment; and

FIG. 19 is a partial sectional view of a vehicular glass module according to an alternative embodiment.

Description of Embodiments

The following describes embodiments of a vehicular glass module according to the present invention with reference the drawings. However, the present invention is not limited to the following embodiments and can be variously modified without departing from the gist of the present invention.

[First Embodiment]

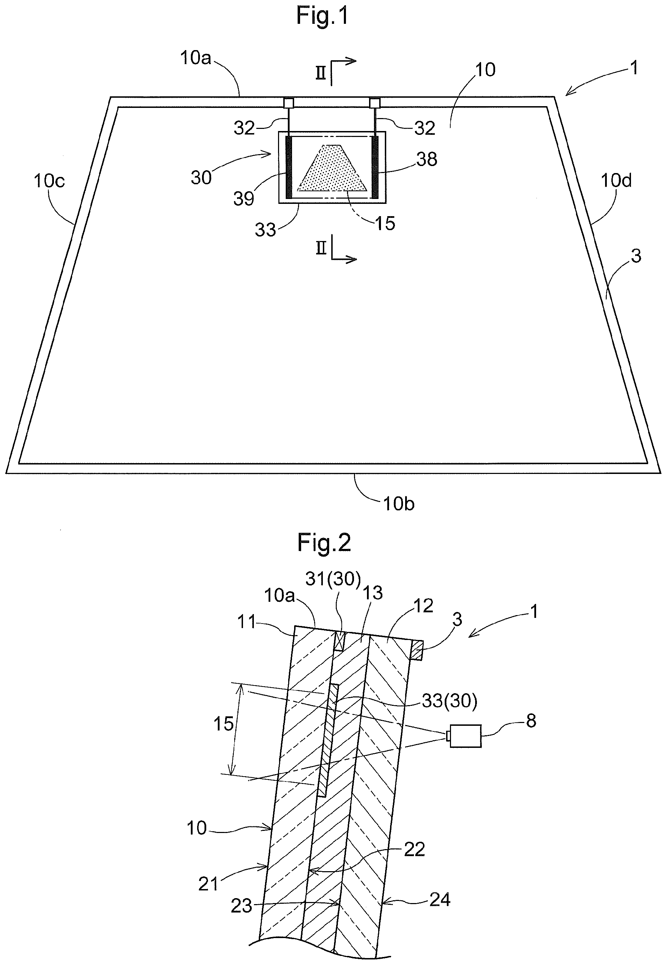

As illustrated in FIG. 1, a vehicular glass module 1 (hereinafter referred to as a "glass module 1") according to the present embodiment includes a glass panel 10 and a heating unit 30. As illustrated in FIG. 2, the glass panel 10 is configured such that a first glass plate 11 on a vehicle outer side and a second glass plate 12 on a vehicle inner side are disposed to face each other. The glass panel 10 is laminated glass with the first glass plate 11 and the second glass plate 12 being joined to each other by an interlayer 13. The interlayer 13 is constituted by an adhesive layer including a conducting wire 32 and a heat generation region of a heater 33 (described later). The heating unit 30 heats an information acquisition region 15 (described later) provided in the glass panel 10.

As illustrated in FIG. 2, the first glass plate 11 constituting the glass panel 10 has a first surface 21 on the vehicle outer side, and a second surface 22 provided on the opposite side from the first surface 21. Further, the second glass plate 12 constituting the glass panel 10 has a third surface 23 facing the second surface 22, and a fourth surface 24 provided on the opposite side from the third surface 23. The first glass plate 11 and the second glass plate 12 have generally the same shape that is convex outward (toward the first surface 21) and are formed in a trapezoidal shape in a plan view. When the glass panel 10 is viewed from the vehicle inner side, the glass panel 10 has an upper side 10a, a lower side 10b, a left side 10c, and a right side 10d, and the upper side 10a is shorter than the lower side 10b (see FIG. 1). In the glass panel 10, the first glass plate 11 and the second glass plate 12 may have a rectangular shape.

Well-known glass plates can be used for the glass plates 11, 12. For example, the glass plates 11, 12 may be heat absorbing glass, clear glass, green glass, UV green glass, and the like. Note that the glass plates 11, 12 are configured to achieve a visible light transmission in conformity with the safety standard of the country where automobiles are used.

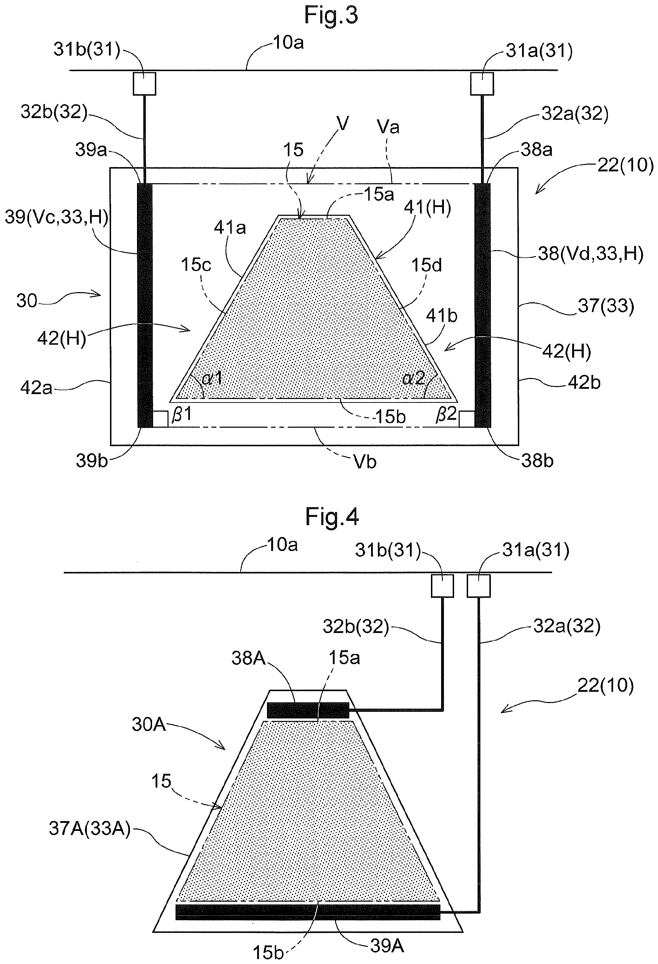

A shielding layer 3 that blocks the visual field from the vehicle outer side is provided along a peripheral edge part of the glass panel 10. The shielding layer 3 is disposed in a peripheral edge region of the glass panel 10. The shielding layer 3 has an opening at a position corresponding to the information acquisition region 15. A power supply section 31 (described later) is covered with the shielding layer 3 in a plan view. In the present embodiment, as illustrated in FIG. 1, the shielding layer 3 is formed in an annular shape. As illustrated in FIG. 2, an image capturing device 8 (an example of an information acquisition device) that can receive light from the vehicle outer side is attached, via a bracket (not illustrated) or the like, inside an automobile to which the glass panel 10 is attached. The image capturing device 8 is disposed such that a generally central region close to the upper side 10a (an example of a side part) of the glass panel 10 is within the angle of view of the image capturing device 8. The glass panel 10 has the information acquisition region 15 which faces the image capturing device 8 and through which light passes, and the information acquisition region 15 is disposed at a position near the upper side 10a of the glass panel 10. More specifically, the information acquisition region 15 is disposed below a generally central region of the upper side 10a. Thus, the image capturing device 8 disposed on the vehicle inner side relative to the glass panel 10 captures the situation outside the vehicle through the information acquisition region 15. As illustrated in FIG. 3, the information acquisition region 15 has a quadrangular shape and has an upper side 15a along the upper side 10a of the glass panel 10, a lower side 15b parallel to the upper side 15a, a left side 15c, and a right side 15d.

In a case where the information acquisition region 15 is disposed at a position near the upper side 10a of the glass panel 10 like the present embodiment, when the glass module 1 is used as the front window of a vehicle, the information acquisition region 15 is hard to disturb the field of view of a driver. Hereby, the glass panel 10 can successfully secure the field of view of the driver. Further, in a case where an information acquisition device such a camera (the image capturing device 8) is disposed to face the information acquisition region 15, for example, a region ahead of the vehicle is hard to become a blind spot due to a bonnet or the like for the information acquisition device, so that the field of view of the information acquisition device is easily secured.

The flat dimension of the information acquisition region 15 is set appropriately in accordance with the image capturing device 8 to be disposed inside the vehicle. Note that the information acquisition region 15 is just a region through which light applied from and/or received by the image capturing device 8 passes, and therefore, the flat dimension of the information acquisition region 15 is set to be relatively small regardless of the type of the image capturing device 8. Here, when the flat dimension of the information acquisition region 15 is too small, the image capturing device 8 is required to have a high installation accuracy. Further, an image acquired by the image capturing device 8 is largely affected by the distortion of the glass panel 10. In the meantime, when the flat dimension of the information acquisition region 15 is too large, the visual field range of the driver is narrowed. Further, a range to be heated by the heater 33 becomes wide, so that energy consumption by the automobile becomes large. From this viewpoint, it is preferable that the flat dimension of the information acquisition region 15 be set in a range of 20 mm (vertical) × 20 mm (lateral) to 250 mm (vertical) × 500 mm (lateral), and it is further preferable that the flat dimension of the information acquisition region 15 be set in a range of 50 mm (vertical) × 50 mm (lateral) to 150 mm (vertical) × 400 mm (lateral).

The heating unit 30 heats at least part of the information acquisition region 15 in the glass panel 10 and removes fog and/or ice on the information acquisition region 15. In the present embodiment, as illustrated in FIG. 2, the heating unit 30 is provided at a position adjacent to the interlayer 13. Although not illustrated herein, the heating unit 30 may be disposed inside the interlayer 13. The interlayer 13 is sandwiched between the first glass plate 11 and the second glass plate 12 to join the glass plates 11, 12 to each other. The interlayer 13 is made of thermoplastic resin. The interlayer 13 can be constituted by, for example, a three-layer structure in which a soft core layer is sandwiched between paired outer layers harder than this. When the interlayer 13 is constituted by a plurality of layers including a soft layer and hard layers as such, it is possible to increase the resistance of a glass substrate to breakage and the sound isolation performance of the glass substrate. In a case where the interlayer 13 is constituted by a plurality of layers having different degrees of hardness as described above, polyvinyl butyral resin (PVB) can be used for the hard outer layers. The polyvinyl butyral resin (PVB) has an excellent adhesive property and an excellent resistance to penetration and therefore is preferable as a material for the outer layers. Further, ethylene vinyl acetate resin (EVA), or polyvinyl acetal resin softer than the polyvinyl butyral resin used for the outer layer can be used for the soft core layer.

The heating unit 30 is described in detail with reference to FIG. 3. The heating unit 30 includes the power supply section 31, the heater 33, and the conducting wire 32 connecting the power supply section 31 to the heater 33. The power supply section 31 is constituted by paired power supply sections 31a, 31b. The power supply sections 31a, 31b are arranged next to each other in an extension direction of the upper side 10a, that is, in the right-left direction. Furthermore, the power supply sections 31a, 31b are disposed inwardly in a surface direction from notches (not illustrated) formed in the upper side 10a of the second glass plate 12 so that the power supply sections 31a, 31b are not exposed from the notches, and the power supply sections 31a, 31b are disposed to be contained in the shielding layer 3 (see FIG. 1) in the line of site from inside the vehicle. Note that the shielding layer 3 is omitted in FIG. 3.

In the heating unit 30, the heater 33 is connected in series to the paired power supply sections 31a, 31b. The conducting wire 32 includes a first conducting wire 32a between the power supply section 31a and the heater 33, and a second conducting wire 32b between the heater 33 and the power supply section 31b. The heater 33 is disposed along a plate surface of the glass panel 10 in the information acquisition region 15 and generates heats upon receipt of power supply from the power supply section 31. Hereby, the information acquisition region 15 receives heat generated from the heater 33 so that the information acquisition region 15 can remove fog, ice, or the like.

As illustrated in FIG. 3, the heater 33 includes a transparent conductive coating 37 covering the information acquisition region 15, and paired bus bars 38, 39, and the heater 33 can heat at least the whole information acquisition region 15. The transparent conductive coating 37 is laminated over the whole surface of a base film and generates heat when a voltage is applied to the bus bars 38, 39. Examples of the material for the transparent conductive coating 37 may be ITO, $SnO_2$ on which Sb or F is doped, zinc oxide on which Al or Ga is doped, TiO2 on which Nb is doped, a continuous film made of TCO (Transparent Conductive Oxide), such as tungsten trioxide, and silver, and the like, for example, but the transparent conductive coating 37 is not limited to them.

The paired bus bars 38, 39 are disposed outside the information acquisition region 15 and disposed to face each other to supply electric power to the transparent conductive coating 37. In the present embodiment, the first bus bar 38 is extended in the top-bottom direction from the upper side 10a side toward the lower side 10b, and the second bus bar 39 is disposed on the opposite side of the transparent conductive coating 37 from the first bus bar 38. The whole shape of the transparent conductive coating 37 is a rectangular shape which overlaps with the information acquisition region 15 having a trapezoidal shape and which is wider than the information acquisition region 15 having a trapezoidal shape in the top-down direction and in the right-left direction.

In the glass module 1, when temperature unevenness occurs in the information acquisition region 15 of the glass panel 10 at the time when the information acquisition region 15 is heated by the heater 33, the interlayer 13 disposed in the information acquisition region also has similar temperature unevenness. Since the temperature unevenness in the interlayer 13 locally changes the refractive index of the interlayer 13, optical strain might be added to a vehicle outside image captured by the image capturing device 8 as the information acquisition device through the interlayer 13. In view of this, the heater 33 configured to generate heat upon receipt of power supply from the power supply section 31 has a uniform heating mechanism H that uniformly heats the information acquisition region 15. The uniform heating mechanism H is constituted by the transparent conductive coating 37 and the paired bus bars 38, 39. Since the information acquisition region 15 is heated uniformly by the uniform heating mechanism H of the heater 33, it is possible to restrain temperature unevenness in the interlayer 13. As a result, it is possible to restrain the occurrence of optical strain caused by the interlayer 13. Here, the meaning that the uniform heating mechanism H uniformly heats the information acquisition region 15 is that the information acquisition region 15 has a maximum temperature gradient of a predetermined value or less while the uniform heating mechanism H is heating the information acquisition region 15, for example. The maximum temperature gradient is preferably 3.0 [°C/mm] or less, and more preferably 2.0 [°C/mm] or less.

The transparent conductive coating 37 has a first region 41 disposed to cover the whole information acquisition region 15, and paired second regions 42, 42 continuous with opposite ends (a left side 41a, a right side 41b) of the first region 41 and disposed outside the information acquisition region 15. In the present embodiment, the transparent conductive coating 37 has the paired second regions 42, 42 on lateral sides of the first region 41 in the right-left direction. The paired bus bars 38, 39 are disposed to face each other with the first region 41 and the paired second regions 42, 42 being sandwiched therebetween. In the present embodiment, the paired bus bars 38, 39 are disposed generally in parallel to each other. The case where the paired bus bars 38, 39 are generally parallel to each other includes a case where the paired bus bars 38, 39 are inclined within ±5 degrees, in addition to a case where the paired bus bars 38, 39 are parallel to each other. Here, a virtual region V is defined as a region between the paired bus bars 38, 39 that region is obtained such that respective ends, on each side, of respective contact parts of the bus bars 38, 39 in contact with the transparent conductive coating 37 are connected to each other (opposite ends 38a, 38b of the bus bar 38 are connected to opposite ends 39a, 39b of the bus bar 39). The virtual region V is disposed to contain all the first region 41 and at least part of the second regions 42 in the transparent conductive coating 37. In the present embodiment, the paired second regions 42, 42 are extended both above and below the first region 41. The paired second regions 42, 42 may not be extended above and below the first region 41.

The virtual region V has an upper side Va (an example of a third side), a lower side Vb (an example of a fourth side), a right side Vd (an example of a first side) and a left side Vc (an example of a second side). The right side Vd and the left side Vc are constituted by the paired bus bars 38, 39. That is, in the virtual region V, the right side Vd is the first bus bar 38, and the left side Vc is the second bus bar 39. The information acquisition region 15 having a quadrangular shape has four sides (the upper side 15a, the lower side 15b, the left side 15c, the right side 15d) facing the sides (the upper side Va, the lower side Vb, the left side Vc, the right side Vd) of the virtual region V.

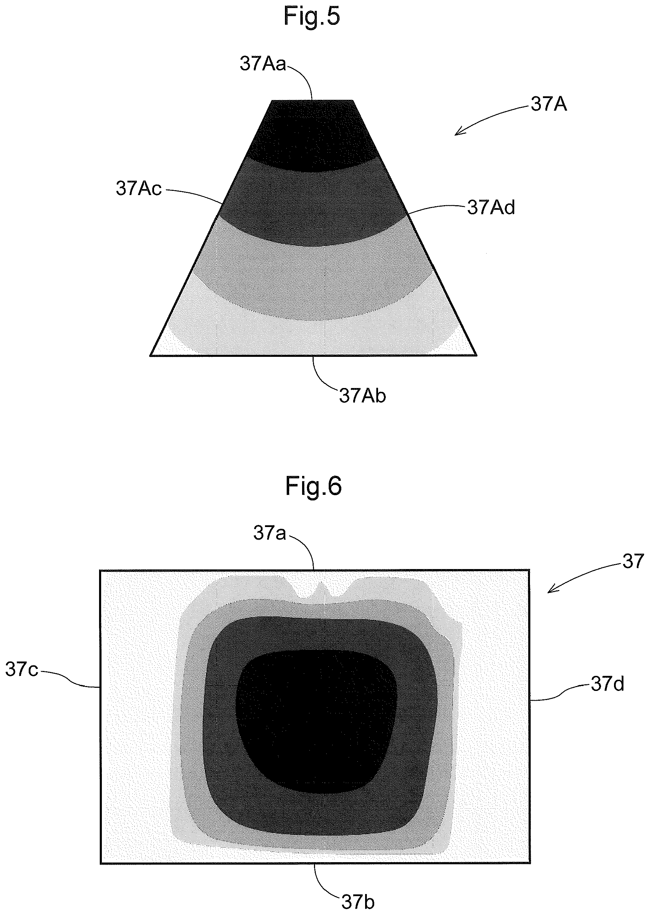

FIG. 5 illustrates a temperature distribution in a transparent conductive coating 37A having a trapezoidal shape as a comparative example, and FIG. 6 illustrates a temperature distribution in the transparent conductive coating 37 in the present embodiment. The temperature distribution of the transparent conductive coating 37A in FIG. 5 is calculated by simulation, and the temperature distribution of the transparent conductive coating 37 in FIG. 6 is based on actual measurement. A heater 33A (a heating unit 30A) including the transparent conductive coating 37A as the comparative example is illustrated in FIG. 4. As illustrated in FIG. 4, the transparent conductive coating 37A has generally the same trapezoidal shape as the information acquisition region 15, and paired bus bars 38A, 39A face each other at respective positions close to the upper side 15a and the lower side 15b of the information acquisition region 15. The paired bus bars 38A, 39A have respective lengths set to be the same as respective lengths of the upper side 15a and the lower side 15b of the information acquisition region 15. In FIGS. 5 and 6, the temperature distributions in the transparent conductive coating 37A and the transparent conductive coating 37 are expressed by shades of black, and as black is darker, the temperature is higher.

In the transparent conductive coating 37A of the comparative example (a trapezoidal shape) illustrated in FIG. 5, a part near an upper side (an upper base) 37Aa has a highest temperature, and the temperature gradually decreases toward a lower side (a lower base) 37Ab. Accordingly, a temperature difference between the part near the upper side (the upper base) 37Aa and each of respective parts near the lower side (the lower base) 37Ab and lower parts of a left side 37Ac and a right side 37Ad is large. Accordingly, it is highly likely that the transparent conductive coating 37A having a trapezoidal shape cannot uniformly heat the information acquisition region 15.

In the meantime, in the transparent conductive coating 37 of the present embodiment (a rectangular shape) illustrated in FIG. 6, its central part has a highest temperature, and the temperature gradually decreases toward an upper side 37a, the lower side 37b, a left side 37c, and a right side 37d. Here, the transparent conductive coating 37 having a rectangular shape has a large region as the central part having a high temperature and a small temperature difference. In the present embodiment, since the central part of the transparent conductive coating 37 having a rectangular shape is at a position corresponding to the information acquisition region 15, the information acquisition region 15 can be heated uniformly. Accordingly, in the present embodiment, the transparent conductive coating 37 and the paired bus bars 38, 39 function as the uniform heating mechanism H.

In the glass module 1, the information acquisition region 15 which faces the image capturing device 8 and through which light passes is formed in a trapezoidal shape having an upper base length equal to or less than one-tenth of a lower base length, for example. In order to prevent fogging or freezing in the information acquisition region 15, it is desirable that the heater 33 be disposed in a region which covers at least the information acquisition region 15 and which is as narrow as possible. This is because power consumption at the time when the heater 33 heats the information acquisition region 15 can be restrained. However, an edge part of the heater 33 radiates heat to a circumference region where the heater 33 is not disposed, at the time when the heater 33 heats the information acquisition region 15. Accordingly, the edge part of the heater 33 has a temperature gradient larger than those in other parts. In view of this, it is desirable that the shape of the heater 33 be a shape similar to the information acquisition region 15 and be larger than the information acquisition region 15. However, even if the heater 33 has such a shape, the interlayer 13 disposed in the information acquisition region 15 may have temperature unevenness, which may locally change the refractive index in the interlayer 13.

In this regard, in the present embodiment, as illustrated in FIG. 3, the transparent conductive coating 37 of the uniform heating mechanism H has the virtual region V formed between the paired bus bars 38, 39 such that respective ends, on each side, of respective contact parts of the paired bus bars 38, 39 in contact with the transparent conductive coating 37 are connected to each other. The virtual region V has the first region 41 covering the information acquisition region 15 and the second regions 42 outside the information acquisition region 15. Hereby, the interval between the paired bus bars 38, 39 becomes generally equal, so that the heater 33 can achieve a uniform potential gradient in the first region 41. Further, since the transparent conductive coating 37 has a rectangular shape along the plate surface of the glass panel 10, it is possible to achieve a uniform potential gradient in the central part of the transparent conductive coating 37 having a rectangular shape. Accordingly, when the central part of the transparent conductive coating 37 is disposed to correspond to the information acquisition region 15, the transparent conductive coating 37 can uniformly generate heat to the information acquisition region 15. As a result, the heater 33 can uniformly heat the information acquisition region 15 by the uniform heating mechanism H.

The transparent conductive coating 37 is attached to the first glass plate 11 or the second glass plate 12. In the present embodiment, as illustrated in FIGS. 2, 3, the transparent conductive coating 37 is attached to the first glass plate 11, so that the first glass plate 11 is a heating target. In this case, no interlayer 13 is present between the first glass plate 11 and the transparent conductive coating 37, so that the first glass plate 11 can be heated efficiently by the transparent conductive coating 37. Further, the glass plates 11, 12 have a small thermal expansion coefficient and a high thermal conductivity as compared with the interlayer 13 made of resin or the like. Accordingly, heat generated by the transparent conductive coating 37 can be effectively transmitted over the whole information acquisition region 15 via the glass plates 11, 12, so that temperature unevenness can be reduced in the information acquisition region 15.

The heater 33 is disposed between the first glass plate 11 and the second glass plate 12 and makes contact with the interlayer 13. The interlayer 13 disposed between the first glass plate 11 and the second glass plate 12 in the glass module 1 is made of thermoplastic resin, so that the refractive index of the interlayer 13 easily changes along with temperature changes. However, since the heater 33 has the above-mentioned uniform heating mechanism H, the interlayer 13 in contact with the heater 33 is uniformly heated by the heater 33, so that the interlayer 13 can restrain temperature unevenness.

As illustrated in FIG. 3, the virtual region V has the lower side Vb formed between end parts (bottom ends) 38b, 39b of the paired bus bars 38, 39. Further, the information acquisition region 15 has the left side 15c and the right side 15d (examples of opposite lateral sides) that are extended from both ends of the lower side 15b. Here, an angle formed between the lower side Vb and each of the paired the bus bars 38, 39 in the virtual region V is larger than an angle formed between the lower side 15b and each of the left side 15c and the right side 15d in the information acquisition region 15 and is 90 degrees. That is, when $\alpha 1$ is defined as an angle formed between the lower side 15b and the left side 15c in the information acquisition region 15, and $\beta 1$ is defined as an angle formed between the lower side Vb of the virtual region V and the second bus bar 39, $\alpha 1$ and $\beta 1$ are set to satisfy Expression (1) as follows.

$$\alpha 1 < \beta 1 = 90 \text{ (degrees)} \dots (1)$$

Similarly, $\beta 2$ formed between the lower side Vb of the virtual region V and the first bus bar 38 is also larger

than $\alpha2$ formed between the lower side 15b and the right side 15d in the information acquisition region 15 and is set to 90 degrees, as indicated by Expression (2) as follows.

$$\alpha2 < \beta2 = 90 \text{ (degrees)} \dots (2)$$

As described earlier, in the windshield, the glass panel 10 is convex outwardly to swell downward from its upper end and the image capturing device 8 is disposed horizontally, so that the information acquisition region 15 has a trapezoid shape. Since the bus bars 38, 39 and the lower side Vb in the virtual region V and the lower side 15b, the left side 15c, and the right side 15d in the information acquisition region 15 satisfy Expressions (1), (2), the interval between the paired bus bars 38, 39 is equalized. Hereby, the first region 41 covering the whole information acquisition region 15 in the transparent conductive coating 37 is easily disposed closer to the center of the virtual region V. Accordingly, the uniform heating mechanism H that uniformly heats the information acquisition region 15 can be appropriately constituted by the transparent conductive coating 37 and the paired bus bars 38, 39.

[Modification of First Embodiment]

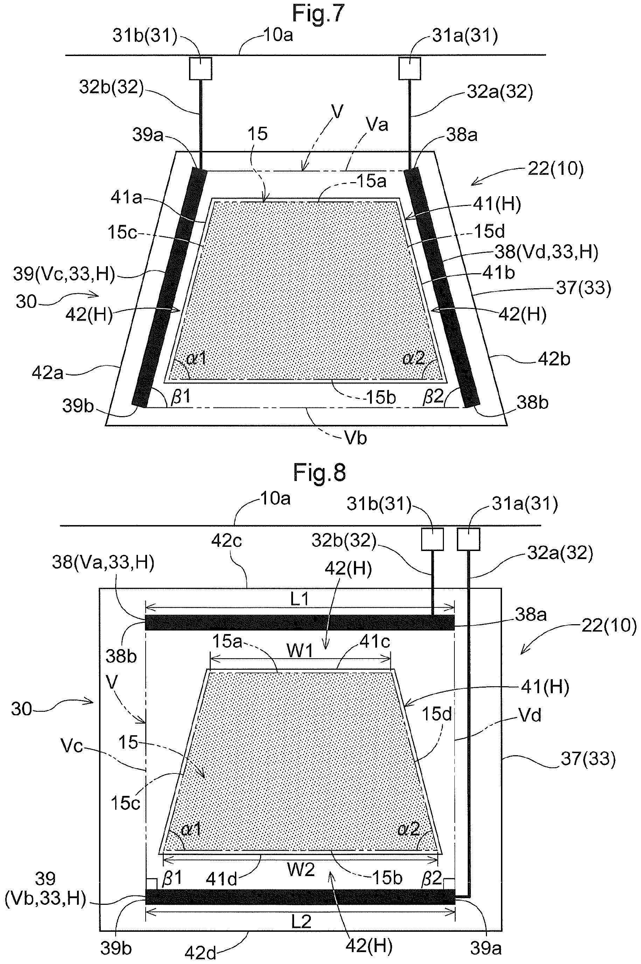

As illustrated in FIG. 7, in the present modification, the uniform heating mechanism H is constituted by the transparent conductive coating 37 covering the information acquisition region 15, and the paired bus bars 38, 39 disposed to face each other with the virtual region V being sandwiched therebetween. However, the present modification is different from the first embodiment in the following points. The information acquisition region 15 is formed in a wide trapezoidal shape in the right-left direction with the upper side 15a longer in the right-left direction than that in the first embodiment. The virtual region V is a trapezoidal shape with the upper side Va shorter than the lower side Vb. The paired bus bars 38, 39 are disposed along the left side 15c and the right side 15d of the information acquisition region 15. The virtual region V is thus formed in a trapezoidal shape with the upper side (the upper base) Va, the lower side (the lower base) Vb, the first bus bar 38 as the right side Vd, and the second bus bar 39 as the left side Vc.
As illustrated in FIG. 7, in the present modification, in the virtual region V, the angles (internal angles) $\beta1$, $\beta2$ formed respectively from the left side Vc and the right side Vd constituted by the paired bus bars 38, 39 to the lower side Vb are set to be equal to or more than 55 degrees but less than 90 degrees. That is, in the present modification, Expressions (3), (4) are satisfied.

$$55 \text{ (degrees)} \le \alpha1 = \beta1 < 90 \text{ (degrees)} \dots (3)$$

$$55 \text{ (degrees)} \le \alpha2 = \beta2 < 90 \text{ (degrees)} \dots (4)$$

In the present modification, the virtual region V has a trapezoidal shape, not a rectangular shape, but the angles $\beta1$, $\beta2$ formed from the lower side Vb (the lower base) to the left side Vc (a leg) and the right side Vd (a leg) in the virtual region V are equal to or more than 55 degrees but less than 90 degrees. Accordingly, the virtual region V has a shape similar to a rectangular shape, and the interval between the paired bus bars 38, 39 in the virtual region V is easily equalized. Further, the first region 41 covering the whole information acquisition region 15 in the transparent conductive coating 37 is easily disposed closer to the center of the virtual region V. Accordingly, the uniform heating mechanism H that uniformly heats the information acquisition region 15 can be appropriately constituted by the transparent conductive coating 37 and the paired bus bars 38, 39. As such, in the present embodiment, since the virtual region V by the heater 33 is expanded to outside the information acquisition region 15 in the glass module 1, it is possible to uniformly heat the information acquisition region 15. Further, in the present embodiment, since the shape of the virtual region V is made as close as possible to the shape of the information acquisition region 15 having a trapezoidal shape, it is possible to restrain heat radiation loss and power consumption by the heater 33 and to restrain the occurrence of optical strain caused by the interlayer 13 in the information acquisition region 15.

[Second Embodiment]

As illustrated in FIG. 8, the uniform heating mechanism H in a second embodiment is constituted by the transparent conductive coating 37 covering the information acquisition region 15 and the paired bus bars 38, 39 disposed above and below the transparent conductive coating 37. The paired bus bars 38, 39 are disposed outside the information acquisition region 15 and disposed to face each other to supply electric power to the transparent conductive coating 37. In the present embodiment, the paired bus bars 38, 39 are disposed above and below the information acquisition region 15, respectively. The virtual region V has the upper side Va (an example of the first side), the lower side Vb (an example of the second side), the right side Vd (an example of the third side), and the left side Vc (an example of the fourth side). The upper side Va and the lower side Vb are constituted by the paired bus bars 38, 39. That is, in the present embodiment, the upper side Va is the first bus bar 38, and the lower side Vb is second bus bar 39 in the virtual region V. The other configurations are the same as those in the first embodiment.

The whole shape of the transparent conductive coating 37 is a rectangular shape which overlaps with the information acquisition region 15 having a trapezoidal shape and which is wider than the information acquisition region 15 having a trapezoidal shape in the top-down direction and in the right-left direction. The transparent conductive coating 37 has the first region 41 disposed to cover the whole information acquisition region 15, and the paired second regions 42, 42 continuous with opposite ends (the upper side 41c, the lower side 41d) of the first region 41 and disposed outside the information acquisition region 15. In the present embodiment, the transparent conductive coating 37 has the paired second regions 42, 42 above and below the first region 41, respectively. The paired bus bars 38, 39 are disposed to face each other with the first region 41 and the paired second regions 42, 42 being sandwiched therebetween. In the present embodiment, the paired bus bars 38, 39 are disposed generally in parallel to each other. Further, the virtual region V is disposed to contain all the first region 41 and at least part of the second regions 42. In the present embodiment, the paired second regions 42, 42 are extended also leftward and rightward from the first region 41. The paired second regions 42, 42 may not be extended leftward and right ward from the first region 41.

In the present embodiment, as illustrated in FIG. 8, the transparent conductive coating 37 of the uniform heating mechanism H also has the first region 41 covering the information acquisition region 15 and the paired second regions 42, 42 outside the information acquisition region 15 in the virtual region V. Hereby, the heater 33 can achieve a uniform potential gradient in the first region 41. Further, since the transparent conductive coating 37 has a rectangular shape along the plate surface of the glass panel 10, it is possible to achieve a uniform potential gradient in the central part of the transparent conductive coating 37 having a rectangular shape. Accordingly, when the central part of the transparent conductive coating 37 is disposed to correspond to the information acquisition region 15, the transparent conductive coating 37 can uniformly generate heat to the information acquisition region 15. As a result, the heater 33 can uniformly heat the information acquisition region 15 by the uniform heating mechanism H.

As illustrated in FIG. 8, the angles $\beta1$, $\beta2$ formed from the bus bar 39 corresponding to the lower side Vb to the left side Vc and the right side Vd in the virtual region V are larger than the angles (internal angles) $\alpha1$, $\alpha2$ formed from the lower side 15b to the left side 15c and the right side 15d (examples as opposite lateral sides) extended from the opposite ends of the lower side 15b in the information acquisition region 15 and are 90 degrees. That is, in the second embodiment, Expressions (1), (2) are satisfied as follows.

$$\alpha1 < \beta1 = 90 \text{ (degrees)} \ldots (1)$$

$$\alpha2 < \beta2 = 90 \text{ (degrees)} \ldots (2)$$

Further, the first bus bar 38 is longer than the upper side 15a of the information acquisition region 15 and is extended along the upper side 15a. The second bus bar 39 is longer than the lower side 15b of the information acquisition region 15 and is disposed on a side opposite from the first bus bar 38. In the virtual region V, the ratio of the length of the upper side Va formed by the first bus bar 38 to the length of the lower side Vb formed by the second bus bar 39 is larger than the ratio of the length of the upper side 15a to the length of the lower side 15b in the information acquisition region 15 and is equal to or less than 1. That is, when W1 is defined as the length of the upper side 15a and W2 is defined as the length of the lower side 15b in the information acquisition region 15, L1 is defined as the length of the first bus bar 38, and L2 is defined as the length of the second bus bar 39, Expressions (5), (6), (7) are satisfied as follows.

$$W1 < L1 \ldots (5)$$

$$W2 < L2 \ldots (6)$$

$$(W1/W2) < (L1/L2) = 1 \ldots (7)$$

When the lengths L1, L2 of the paired bus bars 38, 39, and the lengths W1, W2 of the upper side 15a and the lower side 15b of the information acquisition region 15 satisfy Expressions (5), (6), (7), the first region 41 covering the whole information acquisition region 15 in the transparent conductive coating 37 is easily disposed closer to the center of the virtual region V. Further, the distance between respective end parts 38a, 39a or the distance between respective end parts 38b, 39b in the paired bus bars 38, 39 becomes equal to the distance between respective central parts of the paired bus bars 38, 39, so that the potential gradient in the first region 41 covering the information acquisition region 15 becomes uniform. Accordingly, the uniform heating mechanism H that uniformly heats the information acquisition region 15 can be appropriately constituted by the transparent conductive coating 37 and the paired bus bars 38, 39.

[Modification 1 of Second Embodiment]

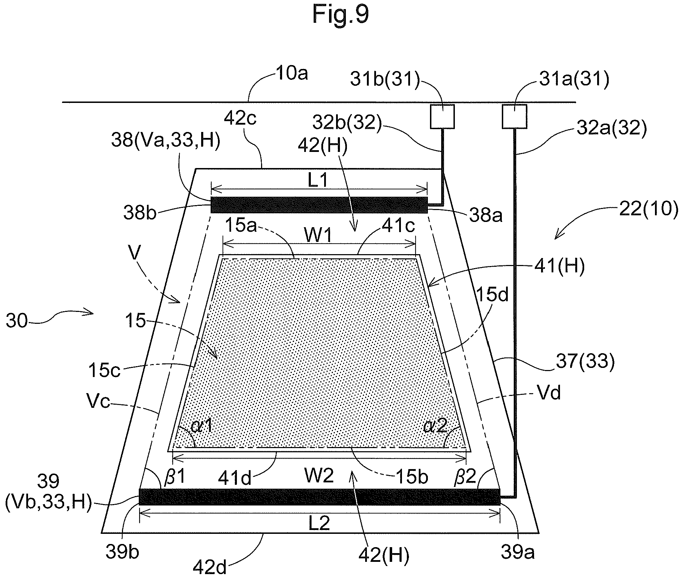

As illustrated in FIG. 9, in Modification 1, the uniform heating mechanism H is also constituted by the transparent conductive coating 37 covering the information acquisition region 15 and the paired bus bars 38, 39 disposed above and below the transparent conductive coating 37. However, Modification 1 is different from the second embodiment in the following points. The left side Vc and the right side Vd of the virtual region V are disposed along the left side 15c and the right side 15d of the information acquisition region 15, respectively. The virtual region V is thus formed in a trapezoidal shape with the first bus bar 38 as the upper side (the upper base) Va, the second bus bar 39 as the lower side (the lower base) Vb, the left side Vc, and the right side Vd.
As illustrated in FIG. 9, in Modification 1, the angles $\beta1$, $\beta2$ in the virtual region V are angles formed from the bus bar 39 corresponding to the lower side Vb to the left side Vc and the right side Vd, respectively. Further, the angles $\alpha1$, $\alpha2$ are angles formed from the lower side 15b of the information acquisition region 15 to the left side 15c and the right side 15d (examples of opposite lateral sides) of the information acquisition region 15 extended from the opposite ends of the lower side 15b. Here, the angles $\beta1$, $\beta2$ are the same as the angles $\alpha1$, $\alpha2$ and are equal to or more than 55 degrees but less than 90 degrees. That is, in Modification 1, Expressions (3), (4) are satisfied as follows.

$$55 \ (\text{degrees}) \le \alpha1 = \beta1 < 90 \ (\text{degrees}) \dots (3)$$

$$55 \ (\text{degrees}) \le \alpha2 = \beta2 < 90 \ (\text{degrees}) \dots (4)$$

Further, the ratio of the length of the upper side Va formed by the first bus bar 38 to the length of the lower side Vb formed by the second bus bar 39 in the virtual region V is the same as the ratio of the length of the upper side 15a to the length of the lower side 15b in the information acquisition region 15. That is, when W1 is defined as the length of the upper side 15a and W2 is defined as the length of the lower side 15b in the information acquisition region 15, L1 is defined as the length of the first bus bar 38, and L2 is defined as the length of the second bus bar 39, Expressions (5), (6), (8) are satisfied as follows.

$$W1 < L1 \dots (5)$$

$$W2 < L2 \dots (6)$$

$$(W1/W2) = (L1/L2) < 1 \dots (8)$$

When the lengths L1, L2 of the paired bus bars 38, 39 and the lengths W1, W2 of the upper side 15a and the lower side 15b of the information acquisition region 15 satisfy Expressions (5), (6), (8), the first region 41 covering the whole information acquisition region 15 in the transparent conductive coating 37 is easily disposed closer to the center of the virtual region V. Further, the distance between respective end parts 38a, 39a or the distance between respective end parts 38b, 39b in the paired bus bars 38, 39 becomes equivalent to the distance between respective central parts of the paired bus bars 38, 39, so that the potential gradient in the first region 41 covering the information acquisition region 15 becomes uniform. Accordingly, the uniform heating mechanism H that uniformly heats the information acquisition region 15 can be appropriately constituted by the transparent conductive coating 37 and the paired bus bars 38, 39.

[Modification 2 of Second Embodiment]

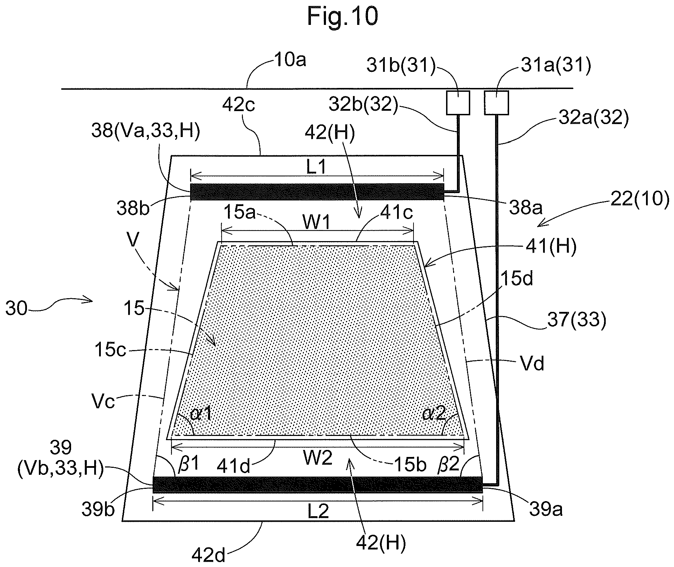

As illustrated in FIG. 10, similarly to Modification 1, in Modification 2, the uniform heating mechanism H is also constituted by the transparent conductive coating 37 covering the information acquisition region 15 and the paired bus bars 38, 39 disposed above and below the transparent conductive coating 37. However, Modification 2 is different from Modification 1 in the following points. That is, the left side Vc and the right side Vd of the virtual region V are not parallel to the left side 15c and the right side 15d of the information acquisition region 15.

The whole shape of the transparent conductive coating 37 is a rectangular shape which overlaps with the information acquisition region 15 having a trapezoidal shape and which is wider than the information acquisition region 15 having a trapezoidal shape in the top-down direction and in the right-left direction. The transparent conductive coating 37 has the first region 41 disposed to cover the whole information acquisition region 15, and the paired second regions 42, 42 continuous with the opposite ends (the upper side 41c and the lower side 41d) of the first region 41 and disposed outside the information acquisition region 15. In Modification 2, the transparent conductive coating 37 has the paired second regions 42, 42 above and below the first region 41. The paired bus bars 38, 39 are disposed generally in parallel to each other to face an upper side 42c and a lower side 42d as outer edges of the paired second regions 42, 42, respectively. Further, the paired bus bars 38, 39 are disposed such that the virtual region V, obtained by connecting respective ends 38a, 39a of the paired bus bars 38, 39 to each other and respective ends 38b, 39b of the paired bus bars 38, 39 to each other, contain the whole first region 41 and at least part of the paired second regions 42, 42.

As illustrated in FIG. 10, in Modification 2, the angles $\beta1$, $\beta2$ in the virtual region V are angles formed from the bus bar 39 corresponding to the lower side Vb to the left side Vc and the right side Vd, respectively. Further, the angles $\alpha1$, $\alpha2$ are angles formed from the lower side 15b of the information acquisition region 15 to the left side 15c and the right side 15d (examples of opposite lateral sides) of the information acquisition region 15, the left side 15c and the right side 15d being extended from the opposite ends of the lower side 15b. Here, the angles $\beta1$, $\beta2$ are large than the angles $\alpha1$, $\alpha2$ and are set to be equal to or more than 55 degrees but less than 90 degrees. That is, in Modification 2, Expressions (9) to (12) are all satisfied as follows. Although not illustrated herein, only either of Expressions (9) and (11) may be satisfied.

$$\alpha1 < \beta1 \ldots (9)$$

$$55 \text{ (degrees)} \leq \beta1 < 90 \text{ (degrees)} \ldots (10)$$

$$\alpha2 < \beta2 \ldots (11)$$

$$55 \text{ (degrees)} \leq \beta2 < 90 \text{ (degrees)} \ldots (12)$$

The first bus bar 38 is longer than the upper side 15a of the information acquisition region 15 and is extended along the upper side 15a. The second bus bar 39 is longer than the lower side 15b of the information acquisition region 15 and is disposed on a side opposite from the first bus bar 38. In the virtual region V, the ratio of the length of the upper side Va formed by the first bus bar 38 to the length of the lower side Vb formed by the second bus bar 39 is larger than the ratio of the length of the upper side 15a of the information acquisition region 15 to the length of the lower side 15b of the information acquisition region 15 and is equal to or less than 1. That is, when W1 is defined as the length of the upper side 15a of the information acquisition region 15, W2 is defined as the length of the lower side 15b of the information acquisition region 15, L1 is defined as the length of the first bus bar 38, and L2 is defined as the length of the second bus bar 39, Expressions (5), (6), (13) are satisfied as follows.

$$W1 < L1 \ldots (5)$$

$$W2 < L2 \ldots (6)$$

$$(W1/W2) < (L1/L2) \leq 1 \ldots (13)$$

When the lengths L1, L2 of the paired bus bars 38, 39 and the lengths W1, W2 of the upper side 15a and the lower side 15b of the information acquisition region 15 satisfy Expressions (5), (6), (13), the first region 41 covering the whole information acquisition region 15 in the transparent conductive coating 37 is easily disposed closer to the center of the virtual region V. Further, the distance between respective end parts 38a, 39a or the distance between respective end parts 38b, 39b of the paired bus bars 38, 39 becomes equivalent to the distance between respective central parts of the paired bus bars 38, 39, so that the potential gradient in the first region 41 covering the information acquisition region 15 becomes uniform. Accordingly, the uniform heating mechanism H that uniformly heats the information acquisition region 15 can be appropriately constituted by the transparent conductive coating 37 and the paired bus bars 38, 39. The other configurations are the same as those in the first embodiment.

[Other Modifications of Second Embodiment]

Although not illustrated herein, in Modifications 1, 2 of the second embodiment, the paired bus bars 38, 39 may be disposed on the left side Vc and the right side Vd of the virtual region V, along the left side 15c and the right side 15d of the information acquisition region 15.

[Third Embodiment]

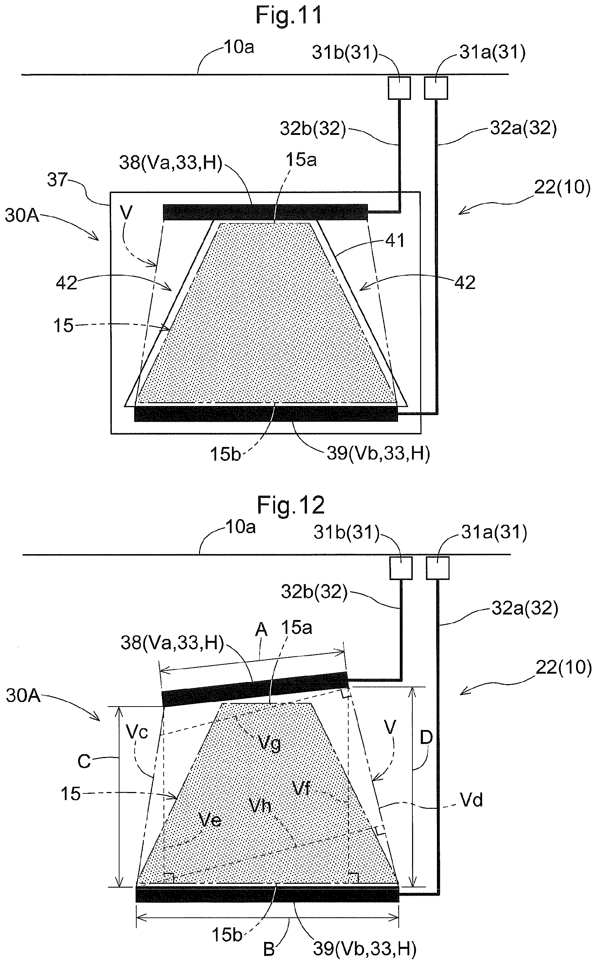

As illustrated in FIG. 11, in a third embodiment, the paired bus bars 38, 39 are disposed above and below the information acquisition region 15, respectively, and the first bus bar 38 disposed above the information acquisition region 15 is longer than the upper side 15a of the information acquisition region 15. Accordingly, the transparent conductive coating 37 has the first region 41 and the second regions 42 on both sides of the first region 41 in the virtual region V.
In the example illustrated in FIG. 11, the first bus bar 38 is extended from opposite end sides of the upper side 15a of the information acquisition region 15. The first bus bar 38 may be extended only from one side (the right side or the left side) of the opposite ends of the upper side 15a of the information acquisition region 15.

[Fourth Embodiment]

As illustrated in FIG. 12, in a fourth embodiment, in terms of two sides (the upper side Va and the lower side Vb) with a smaller ratio of the short side to the long side, out of two pairs of sides (the upper side Va and the lower side Vb, the left side Vc and the right side Vd) facing each other among four sides forming the virtual region V, the short side (the upper side Va) is taken as a first side, and the long side (the lower side Vb) is taken as a second side. Further, A is defined as the length of the first side (the upper side Va), and B is defined as the length of the second side (the lower side Vb). In terms of two line segments (line segments Ve, Vf) which are perpendicular lines perpendicular to the second side (the lower side Vb) and which connect opposite ends of the first side (the upper side Va) to the second side (the lower side Vb) with respective shortest distances, a first perpendicular line is defined as a line segment (the line segment Ve) with a shorter length, and a second perpendicular line is defined as a line segment (the line segment Vf) with a longer length. When C is defined as the length of the first perpendicular line (the line segment Ve), and D is defined as the length of the second perpendicular line (the line segment Vf), the virtual region V is formed such that the length A of the first side (the upper side Va), the length B of the second side (the lower side Vb), the length C of the first perpendicular line (the line segment Ve), and the length D of the second perpendicular line (the line segment Vf) satisfy the expression in Math. 2 as follows.

[Math. 2]

$$(A/B) \times (C/D) \geq 0.20$$

In the present embodiment, the virtual region V is formed in a trapezoidal shape or a rectangular shape. Here, even in a case where the virtual region V has a trapezoidal shape, when the expression in Math. 2 is satisfied, the upper side Va corresponding to the upper base of the virtual region V having a trapezoidal shape can secure a predetermined length. Hereby, the heater 33 can achieve a uniform potential gradient in the first region 41 covering the information acquisition region 15, thereby allowing the heater 33 to uniformly generate heat in the information acquisition region 15. As a result, the heater 33 can uniformly heat the information acquisition region 15.
In addition, in the present embodiment, the paired bus bars 38, 39 are disposed on two sides facing each other with a shorter distance out of the two pairs of sides (the upper side Va and the lower side Vb, the left side Vc and the right side Vd) facing each other among the four sides forming the virtual region V. In the example illustrated in FIG. 12, the upper side Va and the lower side Vb are not parallel to each other, and the left side Vc and the right side Vd are not parallel to each other. Accordingly, in terms of the left side Vc and the right side Vd, a line segment Vg with a smallest length and a line segment Vh with a largest length that are perpendicular lines perpendicular to the right side Vd and are directed to the left side Vc are compared with the first perpendicular line (the line segment Ve) and the second perpendicular line (the line segment Vf) between the upper side Va and the lower side Vb. For example, the average length of the line segment Vg and the line segment Vh is compared with the average length of the line segment Ve and the line segment Vf. In the example of FIG. 12, since the average length of the line segment Ve and the line segment Vf is shorter than the average length of the line segment Vg and the line segment Vh, the bus bars 38, 39 are disposed on the upper side Va and the lower side Vb in the virtual region V.

In a case where heating is performed by applying a constant voltage to the virtual region V formed on the transparent conductive coating 37 of the heater 33, the transparent conductive coating 37 can have a higher sheet resistance as the distance between the paired bus bars 38, 39 is shorter. Accordingly, in the present embodiment, the paired bus bars 38, 39 are disposed on two sides Va, Vb facing each other with a shorter distance in the virtual region V. Hereby, the transparent conductive coating 37 easily secures a predetermined sheet resistance, thereby making it possible to reduce the film thickness of the transparent conductive coating 37. As a result, the transmission factor of the virtual region V including the information acquisition region 15 can be raised.

In the present embodiment, it is also possible to uniformly heat the information acquisition region 15 when the virtual region V by the heater 33 is expanded to outside the information acquisition region 15 in the glass module 1. Further, when the shape of the virtual region V is made as close as possible to the shape of the information acquisition region 15 having a trapezoidal shape, it is possible to restrain heat radiation loss and power consumption by the heater 33 and to restrain the occurrence of optical strain caused by the interlayer 13 in the information acquisition region 15. Note that the expression in Math. 2 is also satisfied in the glass modules 1 according to the first embodiment to the third embodiment.

[Examples]

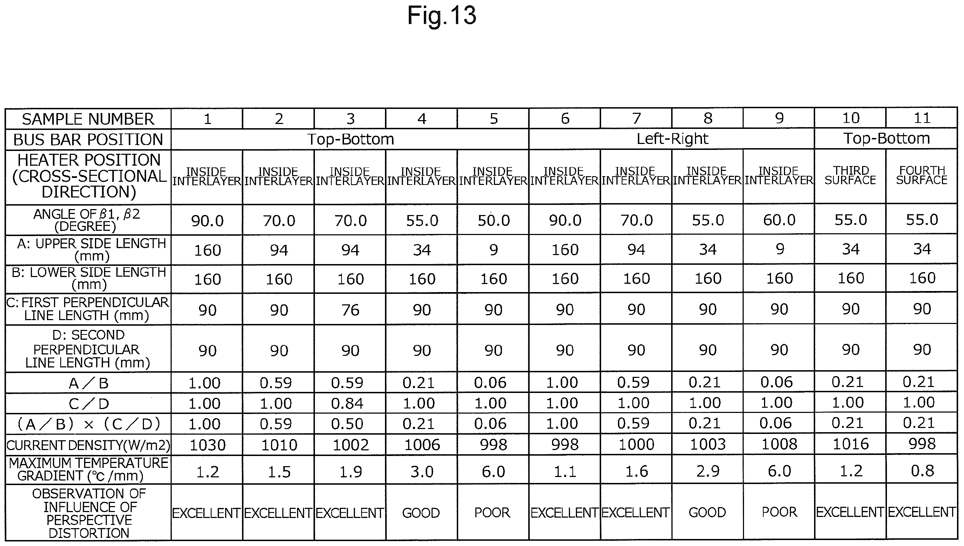

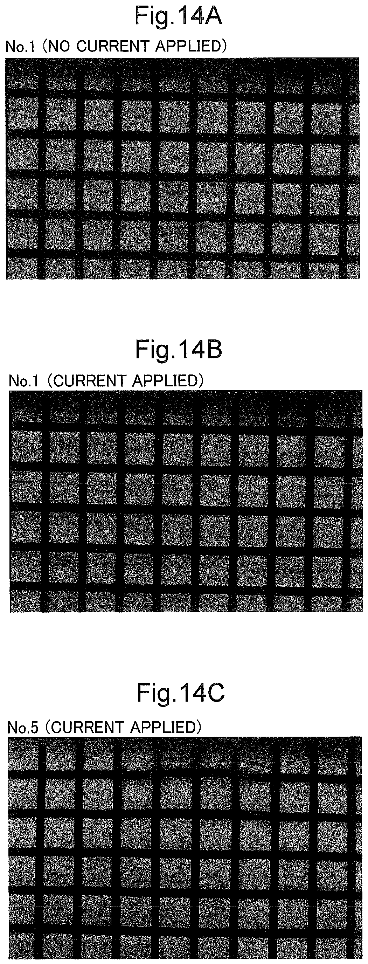

In terms of Samples 1 to 11 illustrated in a table in FIG. 13, a power density and a maximum temperature gradient were calculated, and an influence of perspective distortion (optical strain) in a captured image when a target illustrated in FIG. 14A was captured by a camera (the image capturing device 8) was observed. As illustrated in the table in FIG. 13, the heater 33 constituted by the transparent conductive coating 37 and the paired bus bars 38, 39 was disposed inside the interlayer 13 between the first glass plate 11 and the second glass plate 12 in Samples 1 to 9. Further, the heater 33 was disposed on the third surface 23 of the second glass plate 12 in Sample 10, and the heater 33 was disposed on the fourth surface 24 of the second glass plate 12 in Sample 11. Further, in Samples 1 to 9, the heater 33 was a film heater, and in Samples 10, 11, the heater 33 was constituted by a fluorine-doped tin oxide film (Low-E film). The glass panel 10 was constituted by the first glass plate 11 and the second glass plate 12, and the glass plates 11, 12 were each float glass with a thickness of 2 mm.

In Samples 1 to 5, 10 to 11, the paired bus bars 38, 39 were disposed on the upper side Va and the lower side Vb of the virtual region V of the transparent conductive coating 37, similarly to the second embodiment (for example, the form illustrated in FIG. 8). In Samples 6 to 9, the paired bus bars 38, 39 were disposed on the left side Vc and the right side Vd of the virtual region V of the transparent conductive coating 37, similarly to the first embodiment (for example, the form illustrated in FIG. 3). In Samples 1 to 11, the angles $\beta 1$, $\beta 2$ in the virtual region V of the heater 33 illustrated in FIG. 7, respective lengths ("A," "B," "C," "D") of the line segments in the virtual region V of the heater 33 illustrated in FIG. 12, and so on are as illustrated in the table of FIG. 13.

The maximum temperature gradient in Samples 1 to 11 was calculated based on the surface temperature of a sample, measured by use of a thermography camera. At the time of the measurement of the surface temperature of the sample with the thermography camera, the distance between the thermography camera and the sample was set to 850 mm, and the attaching angle of the sample was set to 80 degrees from a horizontal plane. A part with a maximum gradient was selected in a temperature profile (a temperature curve) with a predetermined length on a straight line including a position at the maximum temperature in the sample to calculate the maximum temperature gradient in terms of Samples 1 to 11.

At the time of observation of the influence of perspective distortion in the captured image captured by the camera, the camera, each of Samples 1 to 11, and a target to be visually recognized were disposed on a straight line. As the target, a plate material having a surface with a lattice pattern, illustrated in FIG. 14A, was prepared. The distance between the camera and the sample was set to 600 mm, and the distance between the sample and the target was set to 4000 mm. The sample and the target are disposed to be perpendicular to the horizontal direction, and an image of the target focused by the camera was captured after a current was applied to the sample. In Samples 1 to 11, the current was applied between the paired bus bars 38, 39 such that the output per unit area was around 1000 W/m$^2$. The observation of the influence of perspective distortion was evaluated in terms of Samples 1 to 11 as follows: "Excellent" indicates a case where perspective distortion was hardly observed in the captured image; "Good" indicates a case where perspective distortion was slightly observed in the captured image; and "Poor" indicates a case where perspective distortion was notably observed in the captured image. A captured image (evaluation: "Excellent") at the time of current application to Sample 1 is illustrated in FIG. 14B, and a captured image (evaluation: "Poor") at the time of current application to Sample 5 is illustrated in FIG. 14C.

As the result illustrated in the table in FIG. 13, in terms of Samples 1 to 9 in which the heater 33 was disposed inside the interlayer 13, Sample 1 (Sample 6) with the heater 33 (the transparent conductive coating 37) having a rectangular shape has a maximum temperature gradient smaller than that in Samples 2 to 5 (Samples 7 to 9) with the heater 33 (the transparent conductive coating 37) that is not rectangular. In Samples 2 to 5 (Samples 7 to 9), the maximum temperature gradient is smaller as the value of "(A/B) × (C/D)" is larger.

In Sample 5 with the smallest value of "(A/B) × (C/D)" among Samples 1 to 5, the influence of perspective distortion was notably observed in the captured image at the time of current application to the transparent conductive coating 37. In Sample 4, perspective distortion was slightly observed in the captured image, but the perspective distortion was an allowable extent as the captured image. No perspective distortion was observed in the captured image in terms of Samples 1 to 3. In Sample 9 with the smallest value of "(A/B) × (C/D)" among Samples 6 to 9, the influence of perspective distortion was notably observed in the captured image. In Sample 8, perspective distortion was slightly observed in the captured image but was an allowable extent as the captured image. No perspective distortion was observed in the captured image in terms of Samples 6, 7. Further, no perspective distortion was observed in the captured image in terms of Samples 10, 11.

In this example, from the results of Samples 1 to 4, 6 to 8, 10 to 11, it was found that, even in a case where the virtual region V in the heater 33 had a shape other than the rectangular shape, when the shape was a quadrangular shape with the value of "(A/B) × (C/D)" being 0.2 or more, a captured image with a small perspective distortion was obtainable in the glass module 1. Further, it was found that, in a case where a Low-E film as the heater 33 was disposed on the third surface 23 or the fourth surface 24 of the second glass plate 12 (Samples 10, 11), the maximum temperature gradient was lower than that in a case where the heater 33 having the same shape was disposed inside the interlayer 13 (Samples 4, 8), and the influence of perspective distortion on the captured image was small.

Further, from the results of Samples 1 to 4, 6 to 8, 10 to 11 in this example, it was found that, when the maximum temperature gradient of the virtual region V was 3.0 [°C/mm] or less with the virtual region V being heated, a captured image with a small perspective distortion was obtainable in the glass module 1. Further, from the results of Samples 1 to 3, 6 to 7, 10 to 11, when the maximum temperature gradient of the virtual region V was 2.0 [°C/mm] or less, perspective distortion was hardly observed in the captured image. Here, the virtual region V contains the information acquisition region 15. Accordingly, it can be said that the uniform heating mechanism H of the heater 33 uniformly heated the information acquisition region 15 when the maximum temperature gradient of the virtual region V was 3.0 [°C/mm] or less with the information acquisition region 15 being heated. Further, for the uniform heating mechanism H, it is more preferable that the maximum temperature gradient of the information acquisition region 15 is 2.0 [°C/mm] or less to acquire a captured image with a small perspective distortion from the information acquisition region 15.

[Fifth Embodiment]

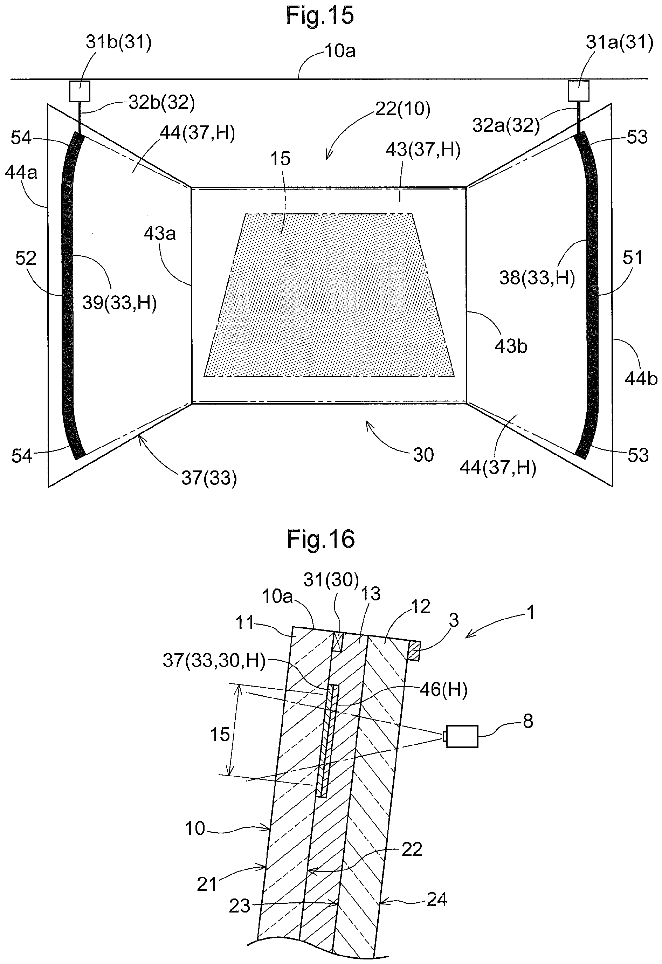

As illustrated in FIG. 15, the uniform heating mechanism H in a fifth embodiment is constituted by the transparent conductive coating 37 having a rectangular region 43 and paired widened regions 44, 44, and the paired bus bars 38, 39. The rectangular region 43 of the transparent conductive coating 37 covers at least the information acquisition region 15. In the present embodiment, the rectangular region 43 contains the information acquisition region 15 and is disposed over the surroundings of the information acquisition region 15. The paired widened regions 44, 44 are continuous with a left side 43a and a right side 43b of the rectangular region 43, respectively, outside the information acquisition region 15 and are extended in directions away from the information acquisition region 15, and the paired widened regions 44, 44 each have a width expanded in a direction along a corresponding one of the left side 43a and the right side 43b as it is distanced from the corresponding one of the left side 43a and the right side 43b. The paired bus bars 38, 39 include respective first parts 51, 52 disposed in parallel to each other while the paired bus bars 38, 39 face each other with the rectangular region 43 being sandwiched therebetween, and respective second parts 53, 54 extended from opposite ends of the respective first parts 51, 52. The second parts 53, 54 each curve to have the same shortest distance from a corresponding side part (the left side 43a or the right side 43b) of the rectangular region 43. The paired widened regions 44, 44 are each formed in a trapezoidal shape with a corresponding one of the left side 43a and the right side 43b of the rectangular region 43 being taken as an upper base and with a corresponding one of the left side 44a and the right side 44b of the widened regions 44, 44 being taken as a lower base. The other configurations are the same as those in the first embodiment.

In the present embodiment, the width of a part (the widened regions 44, 44) of the transparent conductive coating 37 outside the information acquisition region 15 is larger than the width of a rectangular part (the rectangular region 43) of the transparent conductive coating 37 that covers the information acquisition region 15. Hereby, a heating region heated by the heater 33 is expanded to the surroundings of the information acquisition region 15, so that heat radiation from the information acquisition region 15 is restrained. As a result, the interlayer 13 disposed in the information acquisition region 15 can restrain temperature unevenness due to heat radiation from the peripheral edge of the interlayer 13.

Further, the second parts 53, 54 of the paired bus bars 38, 39 curve to have the same shortest distance from the right side 43b and the left side 43a of the rectangular region 43, respectively, so that the vicinities of the left side 43a and the right side 43b of the rectangular region 43 can be equally heated by the second parts 53, 54.

[Sixth Embodiment]

As illustrated in FIG. 16, the uniform heating mechanism H in a sixth embodiment is configured such that a transparent substrate 46 having a linear thermal expansion coefficient smaller than that of the interlayer 13 is laminated on one surface of the transparent conductive coating 37. The transparent substrate 46 can be made of, for example, polyethylene terephthalate, polymethyl methacrylate resin, or polycarbonate resin. An adhesive layer is disposed between the transparent conductive coating 37 and the transparent substrate 46, and polyvinyl butyral (PVB) is used for the adhesive layer, for example. The adhesive layer using PVB can be formed to be equal to or less than 50 $\mu$m, for example. Since the thickness of the adhesive layer is thin as such, the adhesive layer is hard to disturb thermal conduction, and the refractive index of the adhesive layer is hard to change. The heater 33 is disposed between the first glass plate 11 and the second glass plate 12, one of the transparent conductive coating 37 and the transparent substrate 46 is disposed on the first glass plate 11 side or the second glass plate 12 side, and the other one is disposed on the interlayer 13 side. In the example of FIG. 16, the transparent conductive coating 37 is disposed on the first glass plate 11 side, and the transparent substrate 46 is disposed on the interlayer 13 side. The other configurations are the same as those in the first embodiment.

In the present embodiment, the transparent substrate 46 laminated on one surface of the transparent conductive coating 37 has a linear thermal expansion coefficient smaller than that of the interlayer 13, so that the transparent substrate 46 is hard to cause a difference in refractive index due to unequal heating, as compared with the interlayer 13. When the transparent substrate 46 that is hard to cause a difference in refractive index is disposed between the transparent conductive coating 37 and any of the glass plates 11, 12 and the interlayer 13, the transparent substrate 46 is preferentially heated while the transparent substrate 46 maintains its original shape, so that the interlayer 13 is hard to be heated by the transparent conductive coating 37. Hereby, it is possible to restrain temperature unevenness in the interlayer 13 and prevent optical strain.

[Seventh Embodiment]

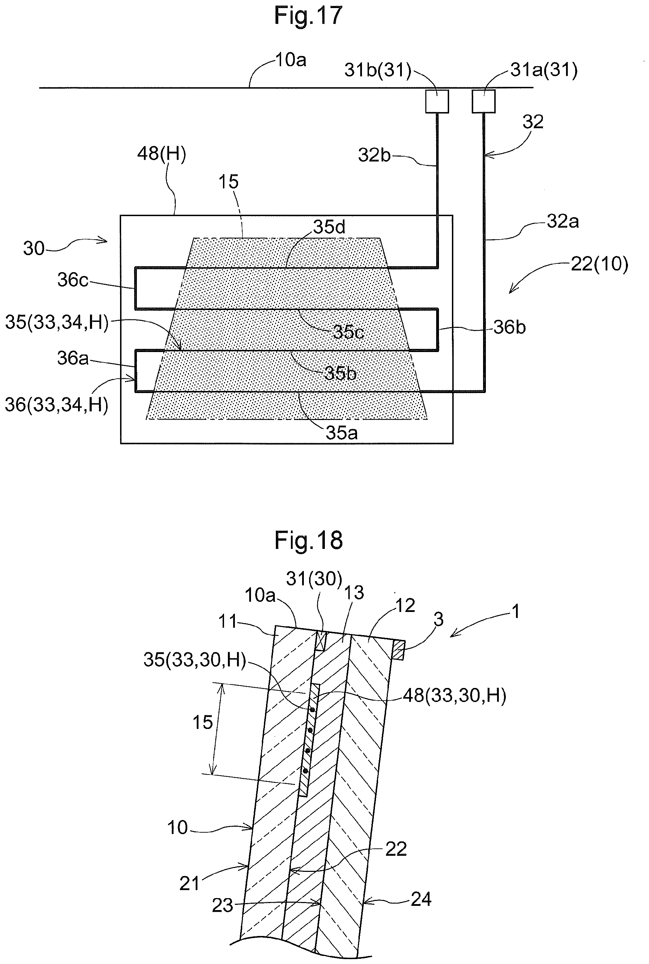

In a seventh embodiment, the heater 33 includes a heating line 34 as illustrated in FIGS. 17 and 18. The uniform heating mechanism H is constituted by the heating line 34 and a heat spreading layer 48 which is disposed between the heating line 34 and the interlayer 13 and which has a thermal conductivity higher than that of the interlayer 13. The heat spreading layer 48 can be made of polyethylene, for example. The heat spreading layer 48 can have a high thermal conductivity in such a manner of providing a metal layer on a side opposite from the heating line 34, mixing a filler having a good thermal diffusion into a base material, or coating the heating line 34 with epoxy resin. The heat spreading layer 48 is disposed to cover at least the whole information acquisition region 15. In the present embodiment, the heat spreading layer 48 is formed in a rectangular shape in a plan view. The heat spreading layer 48 may have a shape other than the rectangular shape, provided that the shape covers the whole information acquisition region 15. Further, it is preferable that the heat spreading layer 48 have a volume expansion coefficient smaller than that of the interlayer 13. The other configurations are the same as those in the first embodiment.

The heating line 34 (the heater 33) is formed to be bent at multiple points at intervals so as to pass through the information acquisition region 15 and its surroundings. As an example of the shape, the heating line 34 in the present embodiment includes a plurality of first heating lines 35 extending in parallel to each other inside the information acquisition region 15, and a second heating line 36 connecting the plurality of first heating lines 35 to each other outside the information acquisition region 15. In the present embodiment, the plurality of first heating lines 35 is disposed in parallel to the upper side 10a of the glass panel 10. Further, the second heating line 36 has a line width larger than the line width of the first heating lines 35. The first heating lines 35 are four transverse line parts 35a, 35b, 35c, 35d linearly extending in the right-left direction inside the information acquisition region 15. A first transverse line part 35a is provided continuous with the first conducting wire 32a drawn from the power supply section 31a, and a second transverse line part 35b, a third transverse line part 35c, and a fourth transverse line part 35d are disposed sequentially toward the upper side 10a. The second heating line 36 is constituted by a first vertical line part 36a disposed between the first transverse line part 35a and the second transverse line part 35b, a second vertical line part 36b disposed between the second transverse line part 35b and the third transverse line part 35c, and a third vertical line part 36c disposed between the third transverse line part 35c and the fourth transverse line part 35d. The heating line 34 of the heater 33 also includes a part of the first conducting wire 32a that part extends along the first transverse line part 35a, and a part of the second conducting wire 32b that part extends along the fourth transverse line part 35d.

In a case where the heater 33 is constituted by the heating line 34, a temperature difference occurs between a region where the heating line 34 is disposed and a region where no heating line 34 is disposed. However, when the heat spreading layer 48 disposed between the heating line 34 and the interlayer 13 and having a thermal conductivity higher than that of the interlayer 13 is provided like the present embodiment, the temperature distribution in the information acquisition region 15 can be made uniform. This also achieves a uniform temperature distribution in the interlayer 13, thereby making it possible to restrain optical strain caused by the interlayer 13.

Further, since the volume expansion coefficient of the heat spreading layer 48 is smaller than that of the interlayer 13, the heat spreading layer 48 can be stably disposed between the first glass plate 11 and the second glass plate 12.

As illustrated in FIG. 18, the heating line 34 (the first heating line 35) is attached to the first glass plate 11 or the second glass plate 12, and in the present embodiment, the heating line 34 (the first heating line 35) is attached to the first glass plate 11. With such a configuration, no interlayer 13 is present between the first glass plate 11 as a heating target and the heating line 34, so that the first glass plate 11 can be heated efficiently by the heating line 34. Further, the glass plates 11, 12 have a small thermal expansion coefficient and a high thermal conductivity as compared with the interlayer 13 made of thermoplastic resin or the like. Accordingly, heat generated by the heating line 34 can be effectively transmitted over the whole information acquisition region 15 via the glass plates 11, 12, so that temperature unevenness can be reduced in the information acquisition region 15.

Further, as illustrated in FIG. 17, in the present embodiment, the heating line 34 is configured such that the line width of the first heating line 35 is smaller than the line width of the second heating line 36. With such a configuration, in a case where the whole heating line 34 is made of the same conductive material, the resistance of the second heating line 36 itself is smaller than the resistance of the first heating line 35 itself. Hereby, the calorific value of the second heating line 36 can be made smaller than the calorific value of the first heating line 35, thereby making it possible to efficiently heat the information acquisition region 15 by the heating line 34 and the heat spreading layer 48. In consideration of heat radiation around the information acquisition region 15, the line width of the second heating line 36 may be set to the same line width as the first heating line 35 in the heating line 34.

[Alternative Embodiments]

(1) The above embodiments have described an example in which the glass module 1 is used for the front window of the vehicle, but the glass module 1 may be used for a rear window or a side window of the vehicle.

(2) It is preferable that the uniform heating mechanism H be configured such that the resistance value of the heater 33 in the information acquisition region 15 and the current density of a current flowing through the heater 33 in the information acquisition region 15 are uniform. When the resistance value of the heater 33 and the current density of a current flowing through the heater 33 in the information acquisition region 15 are uniform, the potential gradient in the information acquisition region 15 is also uniform, thereby allowing the heater 33 to uniformly generate heat in the information acquisition region 15. As a result, the heater 33 can uniformly heat the information acquisition region 15. The meaning that the resistance value of the heater 33 is uniform in the uniform heating mechanism H is that the fluctuation range of the sheet resistance in the heater 33 is within $\pm 15\%$ of a predetermined value, for example. In order to achieve a uniform resistance value for the heater 33, it is more preferable that the fluctuation range of the sheet resistance in the heater 33 be within $\pm 10\%$ of a predetermined value.

(3) The above embodiments have described an example in which the information acquisition region 15 of the glass module 1 is disposed at a position near the upper side 10a of the glass panel 10. However, the information acquisition region 15 of the glass module 1 may be disposed at a position near sides (for example, the lower side 10b, the left side 10c, the right side 10d) other than the upper side 10a of the glass panel 10.

(4) The first embodiment has described an example in which, in the configuration where the information acquisition region 15 has a trapezoidal shape with the upper side 15a being taken as an upper base and the lower side 15b being taken as a lower base, the angles $\beta 1$, $\beta 2$ formed from the lower side Vb to the left side Vc and the right side Vd, respectively, in the virtual region V are larger than the angles $\alpha 1$, $\alpha 2$ formed from the lower side 15b to the left side 15c and the right side 15d in the information acquisition region 15 and are equal to or less than 90 degrees. The information acquisition region 15 may have a reversed trapezoidal shape with the upper side 15a being longer than the lower side 15b. In that case, the angles $\beta 1$, $\beta 2$ may be smaller than the angles $\alpha 1$, $\alpha 2$ and may be set to be equal to or more than 90 degrees. Even in such a configuration, the interval between the paired bus bars 38, 39 is more equalized, so that the first region 41 covering the whole information acquisition region 15 in the transparent conductive coating 37 is easily disposed closer to the center of the virtual region V.

(5) The second embodiment has described an example in which, in the configuration where the information acquisition region 15 has a trapezoidal shape with the upper side 15a being taken as an upper base and the lower side 15b being taken as a lower base, the ratio of the length L1 of the upper side Va formed by the first bus bar 38 to the length L2 of the lower side Vb formed by the second bus bar 39 in the virtual region V is larger than the ratio of the length W1 of the upper side 15a to the length W2 of the lower side 15b in the information acquisition region 15 and is equal to or less than 1. The information acquisition region 15 may have a reversed trapezoidal shape with the upper side 15a being longer than the lower side 15b. In that case, the ratio of the length L2 of the lower side Vb to the length L1 of the upper side Va in the virtual region V may be set to be larger than the ratio of the length W2 of the lower side 15b of the information acquisition region 15 to the length W1 of the upper side 15a of the information acquisition region 15 and to be equal to or less than 1. Even in such a configuration, the interval between the paired bus bars 38, 39 is more equalized, so that the first region 41 covering the whole information acquisition region 15 in the transparent conductive coating 37 is easily disposed closer to the center of the virtual region V.

(6) The above embodiments have described an example in which the shape of the information acquisition region 15 and the shape of the heater 33 are trapezoidal, but the shapes of the information acquisition region 15 and the heater 33 are not limited to a trapezoidal shape and may be any other shapes such as a rectangular shape, a circular shape, and an elliptical shape.

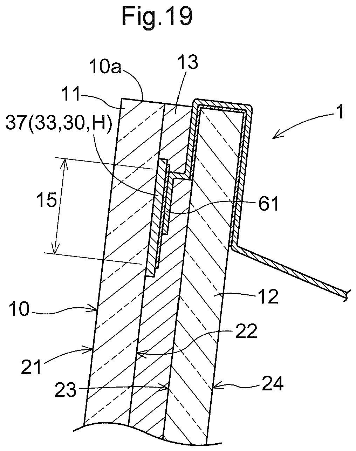

(7) The above embodiments have described an example in which the power supply section 31 is disposed between the first glass plate 11 and the second glass plate 12 in the heating unit 30. However, the heater 33 of the heating unit 30 may be connected to a harness 61, as illustrate in FIG. 19. The harness 61 has one end connected to the transparent conductive coating 37, and the other end drawn to outside the glass panel 10 via the interlayer 13 and the second glass plate 12. In the example of FIG. 19, the heater 33 of the heating unit 30 is constituted by the transparent conductive coating 37, and the first bus bar 38 and the second bus bar 39 are not illustrated herein. Note that the heater 33 may be constituted by the heating line 34. Further, in this alternative embodiment, the heater 33 may be disposed on the third surface 23 of the second glass plate 12, and in that case, the harness 61 is drawn along the second glass plate 12 to outside the glass panel 10.

(8) The above embodiments have described an example in which the heater 33 that heats the information acquisition region 15 is disposed on the second surface 22 of the glass panel 10, but the heater 33 may be disposed on the third surface 23 or the fourth surface 24. Note that a bracket holding the image capturing device 8 (not illustrated, hereinafter just referred to as a "bracket") is fixed to the fourth surface 24 separately. Accordingly, in a case where the heater 33 is disposed on the fourth surface 24 of the second glass plate 12, the bracket may be disposed to overlap with part of the heater 33 on the fourth surface 24. On this account, it is preferable that the bracket be fixed to a position where the bracket overlaps with the heater 33 as little as possible on the fourth surface 24. Accordingly, on the fourth surface 24, the bracket may be fixed to a position where the bracket does not overlap with the bus bars 38, 39 inside the heater 33, or may be fixed to a position where the bracket does not overlap with the transparent conductive coating 37. The bracket can be disposed on an outer peripheral side of the heater 33 on the fourth surface 24. In this case, the heater 33 is easily disposed in the information acquisition region 15, so that the heater 33 can effectively heat the information acquisition region 15.

(9) The first to sixth embodiments have described an example in which the heater 33 is constituted by the transparent conductive coating 37 and the paired bus bars 38, 39. However, a heating line (a conducting wire) may be used instead of the transparent conductive coating 37, and the paired bus bars 38, 39 may be made of the same member as the heating line (the conducting wire).

(10) The first to sixth embodiments (including the modifications) have described an example in which each of the paired bus bars 38, 39 is constituted by one continuous bus bar, but at least either of the paired bus bars 38, 39 may be divided along a side part disposed in the virtual region V.

(11) The first to fifth embodiments (including the modifications) have described an example in which the bus bars 38, 39 are formed into a linear shape, but the bus bars 38, 39 are not limited to a linear shape and may have a curved shape having a convex curvature in one direction, for example.

Industrial Applicability

The present invention is widely applicable to a vehicular glass module including a heating unit for heating an information acquisition region.

Description of Reference Numerals

1: vehicular glass module
8: image capturing device (information acquisition device)
10: glass panel
11: first glass plate
12: second glass plate

13: interlayer
15: information acquisition region
21: first surface
22: second surface
23: third surface
24: fourth surface
30: heating unit
31: power supply section
32: conducting wire
33: heater
34: heating line
35: first heating line
36: second heating line
37: transparent conductive coating
38: first bus bar
39: second bus bar
41: first region
42: second region
43: rectangular region
44: widened region
46: transparent substrate
48: heat spreading layer
51, 52: first part
53, 54: second part
61: harness
H: uniform heating mechanism
V: virtual region
Va: upper side
Vb: lower side
Vc: left side
Vd: right side
$\alpha1$, $\alpha2$: internal angle of information acquisition region
$\beta1$, $\beta2$: internal angle of virtual region

**Claims**

1. A vehicular glass module for supporting, on a vehicle inner side, an information acquisition device capable of receiving light from outside a vehicle, the vehicular glass module comprising:

   a glass panel having an information acquisition region which faces the information acquisition device and through which the light passes; and
   a heating unit configured to heat at least the information acquisition region in the glass panel, wherein:

      the glass panel includes a first glass plate on a vehicle outer side, a second glass plate on the vehicle inner side, the second glass plate facing the first glass plate, and an interlayer disposed between the first glass plate and the second glass plate and made of thermoplastic resin;
      the heating unit includes a power supply section disposed on the glass panel, and a heater disposed along a plate surface of the glass panel in the information acquisition region and configured to generate heat upon receipt of power supply from the power supply section; and
      the heater is configured to be able to heat at least the whole information acquisition region and includes a uniform heating mechanism that uniformly heats the information acquisition region.

2. The vehicular glass module according to claim 1, wherein:
   the uniform heating mechanism uniforms a resistance value of the heater in the information acquisition region and a current density of a current flowing through the heater in the information acquisition region.

3. The vehicular glass module according to claim 1 or 2, wherein:

the uniform heating mechanism includes a transparent conductive coating and paired bus bars configured to supply electric power to the transparent conductive coating;

the transparent conductive coating has a first region disposed to cover the whole information acquisition region, and a second region continuous with the first region and disposed outside the information acquisition region;

the paired bus bars are disposed to face each other with the first region and the second region being sandwiched between the paired bus bars; and

the paired bus bars are disposed such that the whole first region and at least part of the second region are contained in a virtual region obtained such that respective ends, on each side, of respective contact parts of the paired bus bars in contact with the transparent conductive coating are connected to each other.

4. The vehicular glass module according to claim 3, wherein:

the following expression is satisfied:

$$[\text{Math. 1}]$$
$$(A/B) \times (C/D) \geq 0.20,$$

where

A indicates a length of a first side and B indicates a length of a second side, the first side being a short side and the second side being a long side in terms of two sides with a smaller ratio of the short side to the long side out of two pairs of sides facing each other among four sides forming the virtual region, and

C indicates a length of a first perpendicular line and D indicates a length of a second perpendicular line, the first perpendicular line being a line segment with a shorter length and the second perpendicular line being a line segment with a longer length out of two line segments which are perpendicular lines to the second side and which connect opposite ends of the first side to the second side with shortest distances, respectively.

5. The vehicular glass module according to claim 3 or 4, wherein:
the paired bus bars are disposed on two sides away from each other with a shorter distance out of two pairs of sides facing each other among four sides forming the virtual region.

6. The vehicular glass module according to any one of claims 3 to 5, wherein:
the transparent conductive coating is formed in a rectangular shape along a plate surface of the glass panel.

7. The vehicular glass module according to claim 1 or 2, wherein:

the uniform heating mechanism includes a transparent conductive coating and paired bus bars configured to supply electric power to the transparent conductive coating;

the transparent conductive coating has a rectangular region covering at least the information acquisition region, and paired widened regions extended continuous with opposite side parts of the rectangular region, respectively, outside the information acquisition region such that the paired widened regions expand in width in a direction along the side parts as the paired widened regions are away from the side parts;

the paired bus bars include respective first parts disposed in parallel to each other with the paired bus bars facing each other across the rectangular region, and respective second parts extended from opposite ends of the respective first parts; and

the second parts curve to have the same shortest distance from respectively corresponding side parts of the rectangular region.

8. The vehicular glass module according to any one of claims 3 to 7, further comprising:
a transparent substrate having a linear thermal expansion coefficient smaller than a linear thermal expansion coefficient of the interlayer and laminated on one surface of the transparent conductive coating, wherein:

the heater is disposed between the first glass plate and the second glass plate; and
one of the transparent conductive coating and the transparent substrate is disposed on the first glass plate side or the second glass plate side, and the other one is disposed on the interlayer side.

9. The vehicular glass module according to any one of claims 3 to 8, wherein:

the transparent conductive coating is attached to the first glass plate or the second glass plate.

10. The vehicular glass module according to any one of claims 1 to 9, wherein:
the heater is disposed between the first glass plate and the second glass plate and makes contact with the interlayer.

11. The vehicular glass module according to claim 1 or 2, wherein:

the heater includes a heating line;
the uniform heating mechanism further includes a heat spreading layer disposed between the heating line and the interlayer and having a thermal conductivity higher than a thermal conductivity of the interlayer; and
the heat spreading layer is disposed to cover at least the whole information acquisition region.

12. The vehicular glass module according to claim 11, wherein:
the heat spreading layer has a volume expansion coefficient smaller than a volume expansion coefficient of the interlayer.

13. The vehicular glass module according to claim 11 or 12, wherein:
the heating line is attached to the first glass plate or the second glass plate.

14. The vehicular glass module according to any one of claims 1 to 13, further comprising:
a shielding layer disposed in a peripheral edge region of the glass panel and having an opening at a position corresponding to the information acquisition region, wherein:
the power supply section is covered with the shielding layer.

## Fig.1

## Fig.2

## Fig.3

## Fig.4

## Fig.5

37Aa

37Ac

37Ad

37A

37Ab

## Fig.6

37a

37c

37d

37

37b

## Fig.7

## Fig.8

# Fig.9

10a  31b(31)  31a(31)
42c  32b(32)  32a(32)
38(Va,33,H)  42(H)
L1
38b  38a  22(10)
15a  W1  41c
V  41(H)
30  15  15d
15c  37(33)
Vc  Vd
α1  α2
39  β1  41d  W2  15b  β2
(Vb,33,H)  L2
39b  42d  42(H)  39a

# Fig.10

## Fig.11

## Fig.12

## Fig.13

| SAMPLE NUMBER | 1 | 2 | 3 | 4 | 5 | 6 | 7 | 8 | 9 | 10 | 11 |
|---|---|---|---|---|---|---|---|---|---|---|---|
| BUS BAR POSITION | Top-Bottom | | | | | Left-Right | | | | Top-Bottom | |
| HEATER POSITION (CROSS-SECTIONAL DIRECTION) | INSIDE INTERLAYER | INSIDE INTERLAYER | INSIDE INTERLAYER | INSIDE INTERLAYER | INSIDE INTERLAYER | INSIDE INTERLAYER | INSIDE INTERLAYER | INSIDE INTERLAYER | INSIDE INTERLAYER | THIRD SURFACE | FOURTH SURFACE |
| ANGLE OF $\beta 1$, $\beta 2$ (DEGREE) | 90.0 | 70.0 | 70.0 | 55.0 | 50.0 | 90.0 | 70.0 | 55.0 | 60.0 | 55.0 | 55.0 |
| A: UPPER SIDE LENGTH (mm) | 160 | 94 | 94 | 34 | 9 | 160 | 94 | 34 | 9 | 34 | 34 |
| B: LOWER SIDE LENGTH (mm) | 160 | 160 | 160 | 160 | 160 | 160 | 160 | 160 | 160 | 160 | 160 |
| C: FIRST PERPENDICULAR LINE LENGTH (mm) | 90 | 90 | 76 | 90 | 90 | 90 | 90 | 90 | 90 | 90 | 90 |
| D: SECOND PERPENDICULAR LINE LENGTH (mm) | 90 | 90 | 90 | 90 | 90 | 90 | 90 | 90 | 90 | 90 | 90 |
| A／B | 1.00 | 0.59 | 0.59 | 0.21 | 0.06 | 1.00 | 0.59 | 0.21 | 0.06 | 0.21 | 0.21 |
| C／D | 1.00 | 1.00 | 0.84 | 1.00 | 1.00 | 1.00 | 1.00 | 1.00 | 1.00 | 1.00 | 1.00 |
| (A／B)×(C／D) | 1.00 | 0.59 | 0.50 | 0.21 | 0.06 | 1.00 | 0.59 | 0.21 | 0.06 | 0.21 | 0.21 |
| CURRENT DENSITY(W/m2) | 1030 | 1010 | 1002 | 1006 | 998 | 998 | 1000 | 1003 | 1008 | 1016 | 998 |
| MAXIMUM TEMPERATURE GRADIENT (℃/mm) | 1.2 | 1.5 | 1.9 | 3.0 | 6.0 | 1.1 | 1.6 | 2.9 | 6.0 | 1.2 | 0.8 |
| OBSERVATION OF INFLUENCE OF PERSPECTIVE DISTORTION | EXCELLENT | EXCELLENT | EXCELLENT | GOOD | POOR | EXCELLENT | EXCELLENT | GOOD | POOR | EXCELLENT | EXCELLENT |

## Fig.14A

No.1 (NO CURRENT APPLIED)

## Fig.14B

No.1 (CURRENT APPLIED)

## Fig.14C

No.5 (CURRENT APPLIED)

Fig.15

Fig.16

## Fig.17

## Fig.18

# Fig.19

## INTERNATIONAL SEARCH REPORT

International application No.

**PCT/JP2022/025994**

### A. CLASSIFICATION OF SUBJECT MATTER

*H05B 3/20*(2006.01)i; *B60J 1/00*(2006.01)i; *B60S 1/02*(2006.01)i; *C03C 27/12*(2006.01)i; *H05B 3/84*(2006.01)i; *H05B 3/86*(2006.01)i

FI:   H05B3/20 327A; H05B3/20 355A; B60J1/00 H; B60J1/00 J; B60S1/02 300; C03C27/12 L; C03C27/12 M; H05B3/84; H05B3/86

According to International Patent Classification (IPC) or to both national classification and IPC

### B. FIELDS SEARCHED

Minimum documentation searched (classification system followed by classification symbols)

H05B3/20; B60J1/00; B60S1/02; C03C27/12; H05B3/84; H05B3/86

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| X | WO 2020/129420 A1 (AGC INC.) 25 June 2020 (2020-06-25) | 1-2, 10, 14 |
|   | paragraphs [0044]-[0066], [0091]-[0117], fig. 8-9 | |
| Y | | 3-6, 8-9, 11-13 |
| A | | 7 |
| Y | WO 2018/230358 A1 (DENSO CORP.) 20 December 2018 (2018-12-20) | 3-6, 8-9 |
|   | paragraphs [0019]-[0030], fig. 1-3 | |
| A | | 7 |
| Y | WO 2021/106365 A1 (AGC INC.) 03 June 2021 (2021-06-03) | 5 |
|   | paragraphs [0047]-[0049], fig. 8 | |
| A | | 7 |
| Y | JP 2017-91889 A (IBIDEN CO., LTD.) 25 May 2017 (2017-05-25) | 11-13 |
|   | paragraphs [0087]-[0091], fig. 3 | |
| A | | 7 |

☐ Further documents are listed in the continuation of Box C.    ☑ See patent family annex.

| | |
|---|---|
| *    Special categories of cited documents: | "T"  later document published after the international filing date or priority date and not in conflict with the application but cited to understand the principle or theory underlying the invention |
| "A"  document defining the general state of the art which is not considered to be of particular relevance | |
| "E"  earlier application or patent but published on or after the international filing date | "X"  document of particular relevance; the claimed invention cannot be considered novel or cannot be considered to involve an inventive step when the document is taken alone |
| "L"  document which may throw doubts on priority claim(s) or which is cited to establish the publication date of another citation or other special reason (as specified) | "Y"  document of particular relevance; the claimed invention cannot be considered to involve an inventive step when the document is combined with one or more other such documents, such combination being obvious to a person skilled in the art |
| "O"  document referring to an oral disclosure, use, exhibition or other means | |
| "P"  document published prior to the international filing date but later than the priority date claimed | "&"  document member of the same patent family |

| Date of the actual completion of the international search | Date of mailing of the international search report |
|---|---|
| **24 August 2022** | **06 September 2022** |

| Name and mailing address of the ISA/JP | Authorized officer |
|---|---|
| **Japan Patent Office (ISA/JP)** **3-4-3 Kasumigaseki, Chiyoda-ku, Tokyo 100-8915 Japan** | |
| | Telephone No. |

Form PCT/ISA/210 (second sheet) (January 2015)

**INTERNATIONAL SEARCH REPORT**
**Information on patent family members**

International application No.

**PCT/JP2022/025994**

| Patent document cited in search report | | | Publication date (day/month/year) | Patent family member(s) | | | Publication date (day/month/year) |
|---|---|---|---|---|---|---|---|
| WO | 2020/129420 | A1 | 25 June 2020 | US paragraphs [0054]-[0076], [0101]-[0127], fig. 8-9 DE CN | 2021/0307123 112019006307 113195428 | A1 T5 A | |
| WO | 2018/230358 | A1 | 20 December 2018 | US paragraphs [0028]-[0039], fig. 1-3 DE CN | 2020/0094781 112018002999 110740909 | A1 T5 A | |
| WO | 2021/106365 | A1 | 03 June 2021 | DE CN | 112020005155 114728847 | T5 A | |
| JP | 2017-91889 | A | 25 May 2017 | (Family: none) | | | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2017216193 A